# FASCICULE DE BREVET EUROPEEN

(11) **EP 1 974 443 B1**
(45) Date de publication et mention de la délivrance du brevet: **11.01.2012**
(21) Numéro de dépôt: 07717810.1
(22) Date de dépôt: 15.01.2007
(51) Int. Cl.: H02K 15/085

(54) **PROCEDE POUR REALISER UN STATOR DE MACHINE ELECTRIQUE TOURNANTE ET AGENCEMENT DE CONDUCTEURS SUR UN SUPPORT**
VERFAHREN ZUR HERSTELLUNG EINES STATORS EINER ELEKTRISCHEN ROTATIONSMASCHINE UND LEITERANORDNUNG AUF EINEM TRÄGER
METHOD FOR PRODUCING A ROTARY ELECTRIC MACHINE STATOR AND ARRANGEMENT OF CONDUCTORS ON A SUPPORT

(30) Priorité: 16.01.2006 FR 0650141
(43) Date de publication de la demande: 01.10.2008
(73) Titulaire: VALEO EQUIPEMENTS ELECTRIQUES MOTEUR, 94046 Créteil Cedex (FR)
(72) Inventeur: BODIN, Denis, F-62280 Saint Martin Boulogne (FR); CHOCHOY, Jean-Pierre, F-62240 Cremarest (FR); DEFEBVIN, Alain, F-62630 Cormont (FR); JAZE, Michel, F-62630 Frencq (FR); EVEN, Denis, F-75012 Paris (FR)
(74) Mandataire: Gamonal, Didier
(86) Numéro de dépôt international: PCT/FR2007/050648
(87) Numéro de publication internationale: WO 2007/080353

(56) Documents cités:
- EP-A- 1 286 045
- EP-A- 1 372 242
- EP-A- 1 469 579
- EP-A2- 1 109 292
- EP-A2- 1 109 294
- DE-A1- 10 306 147
- FR-A- 2 866 996
- FR-A- 2 879 855
- JP-A- 55 094 567

## Description

### Arrière plan de l'invention

### 1. Domaine de l'invention

L'invention propose un procédé pour réaliser un stator de machine électrique tournante ayant un bobinage compact et présentant un coefficient de remplissage des encoches optimisé.

L'invention proprose plus particulièrement un procédé de réalisation d'un stator de machine électrique tournante comportant un corps annulaire dans la face cylindrique interne duquel sont réalisées des encoches axiales et comportant une pluralité d'enroulements de phase constitués de conducteurs agencés dans des encoches associées du corps, du type qui comporte une étape de dépose des conducteurs sur un support linéaire et deux étapes de transfert.

L'invention concerne également un agencement de conducteurs sur le support linéaire.

### 2. Description de l'art antérieur

Un procédé de réalisation d'un stator de machine électrique tournante est connu de WO-A-01/69762.

Dans ce procédé connu on effectue
- une étape de dépose des conducteurs sur un support linéaire d'orientation principale longitudinale dont la face supérieure comporte des encoches transversales, comportant une première phase de dépose des conducteurs dans les encoches, de manière à former une première couche de conducteurs,
- une première étape de transfert des conducteurs, depuis le support linéaire, sur un support annulaire d'axe principal transversal dont la face cylindrique externe comporte des encoches transversales réparties angulairement autour de l'axe transversal principal du support annulaire, de manière que les deux couches de conducteurs forment deux spirales coaxiales sur le support annulaire, et
- une deuxième étape de transfert des conducteurs depuis le support annulaire sur le corps du stator.
On peut songer à réaliser le bobinage d'un stator à partir de deux couches de conducteurs superposées.
Plus précisément on peut songer à réaliser une deuxième phase de dépose des conducteurs dans les encoches, de manière à former une deuxième couche de conducteurs qui est agencée verticalement au dessus de la première couche

Cette disposition permet de réduire la longueur du support linéaire, qui est déterminée en fonction du nombre total d'encoches du support linéaire.

Ainsi, en réalisant les enroulements en formant deux couches de conducteurs sur le support linéaire, la longueur totale du support linéaire est globalement divisée par deux par rapport à la longueur du support linéaire sur lequel les enroulements ne sont formés qu'à partir d'une seule couche de conducteurs.

Selon ce mode de réalisation les deux phases de dépose du procédé sont indépendantes l'une de l'autre de sorte que pour chaque enroulement du stator, l'étape de dépose des conducteurs consiste à déposer consécutivement deux conducteurs distincts sur le support linéaire.

Chaque conducteur est déposé sur le support linéaire par l'intermédiaire d'une tête de dépose qui décrit par rapport au support linéaire un mouvement globalement sinusoïdal de l'amont vers l'aval lors de chaque phase de dépose.

Chaque phase de dépose comporte donc une période de dépose du conducteur, suivie d'une période de retour de la tête de dépose au cours de laquelle la tête de dépose n'est pas utilisée. Un tel procédé comporte ainsi des temps morts qui allongent la durée globale de réalisation du stator.

De plus, le bobinage réalisé par un tel procédé comporte alors quatre brins d'alimentation du bobinage pour chaque enroulement, chaque brin formant une extrémité de l'un des deux conducteurs, c'est-à-dire le double par rapport à un bobinage réalisé à partir d'une seule couche de conducteurs, ce qui augmente par conséquent le poids et la complexité du stator, notamment.

### Résumé de l'invention

L'invention a pour but de proposer un procédé de réalisation d'un stator de machine électrique tournante permettant de réaliser le bobinage à partir de deux couches de conducteurs, pour lequel la durée de réalisation du stator est réduite par rapport aux procédés selon l'art antérieur et pour lequel le produit final est de structure simplifiée.

Dans ce but, l'invention propose un procédé du type décrit précédemment, dans lequel, d'une part, il est prévu une deuxième phase de dépose des conducteurs dans les encoches du support linéaire, de manière à former une deuxième couche de conducteur, qui est agencée verticalement au dessous de la première couche et d'autre part, pour chaque enroulement, la première phase de dépose et la deuxième phase de dépose consistent à déposer un même conducteur sur le support linéaire, de manière qu'un premier tronçon dudit conducteur forme en partie la première couche de conducteurs et un deuxième tronçon dudit conducteur forme en partie la deuxième couche de conducteurs.
Une définition précise de l'invention est donnée dans les revendications.

Selon d'autre caractéristiques du procédé selon l'invention prises isolément ou en combinaison:
- la première phase de dépose et la deuxième phase de dépose consistent chacune, pour chaque conducteur, à remplir successivement les encoches du support linéaire, qui sont associées au conducteur, en introduisant un brin transversal globalement rectiligne du conducteur dans une encoche associée, en pliant et/ou cintrant le conducteur pour former un brin longitudinal qui est situé transversalement en vis-à-vis d'une face longitudinale verticale latérale du support linéaire, et en introduisant un brin transversal consécutif dans une encoche associée consécutive, de manière que le conducteur forme des ondulations longitudinales comportant une succession de brins transversaux, qui sont reçus dans les encoches associées et de brins longitudinaux qui sont agencés alternativement de part et d'autre du support linéaire,
- chaque conducteur, la première phase de dépose consiste à remplir successivement les encoches associées de l'amont vers l'aval et la deuxième phase de dépose consiste à remplir successivement les encoches associées de l'aval vers l'amont ;
- la deuxième phase de dépose est mise en oeuvre continûment après la première phase de dépose, de manière que les deux tronçons du conducteur sont reliés entre eux au niveau d'une extrémité aval du support linéaire ;
- lors de l'étape de dépose, tous les conducteurs associés aux enroulements sont déposés simultanément sur le support longitudinal, de manière qu'à l'issue de l'étape de bobinage, les premiers tronçons des conducteurs, qui forment la première couche de conducteurs sont globalement parallèles, et les deuxièmes tronçons des conducteurs, qui forment la deuxième couché de conducteurs soient globalement parallèles ;
- la première étape de transfert consiste à transférer successivement les brins transversaux qui sont reçus dans les encoches du support linéaire vers les encoches du support annulaire, par roulage du support annulaire sur le support linéaire, et consiste à transférer progressivement les brins transversaux des conducteurs depuis une encoche d'extrémité aval du support linéaire jusqu'à une encoche d'extrémité amont du support linéaire ;
- pour chaque conducteur, l'étape de dépose consiste à déposer simultanément deux fils conducteurs électriquement sur le support linéaire qui forment ledit conducteur.

L'invention propose aussi un agencement d'un ensemble de conducteurs sur un support linéaire obtenu à l'issue de l'étape de dépose d'un procédé selon l'une quelconque des revendications précédentes, les conducteurs étant aptes à être transférés sur un corps d'un stator, de manière à former une pluralité d'enroulements, dans lequel la face supérieure horizontale du support linéaire comporte une série d'encoches transversales alignées longitudinalement, chaque encoche recevant au moins un brin de chaque conducteur associé à un seul enroulement du stator, dans lequel chaque conducteur comporte une succession de brins transversaux agencés dans des encoches du support linéaire associées, et de brins latéraux qui sont agencés de part et d'autre du support linéaire, caractérisé en ce que chaque enroulement est formé par un seul conducteur dont un premier tronçon forme en partie une première couche inférieure, et un deuxième tronçon forme en partie la deuxième couche.

Selon d'autres caractéristiques de l'agencement selon l'invention prises isolément ou en combinaison:
- les deux extrémités de chaque conducteur sont agencées à proximité d'une extrémité amont du support linéaire ;
- pour deux encoches consécutives associées à un conducteur, recevant chacune un brin transversal du premier tronçon et un brin transversal du deuxième tronçon dudit conducteur,les deux brins transversaux du premier tronçon, qui sont reçus dans ces deux encoches, sont reliés entre eux par un brin latéral inférieur qui est agencé transversalement d'un premier coté du support linéaire, et les deux brins transversaux du deuxième tronçon, qui sont reçus dans ces deux encoches sont reliés entre eux par un brin latéral supérieur qui est agencé transversalement de l'autre coté du support linéaire, par rapport au dit brin latéral inférieur ;
- la longueur des brins transversaux situés à proximité de l'extrémité aval du support linéaire est inférieure à la longueur des brins transversaux situés à proximité de l'extrémité amont du support linéaire ;
- dans la première couche de conducteurs, et dans deux encoches adjacentes du support linéaire qui reçoivent chacune un brin transversal du conducteur associé, le brin longitudinal qui prolonge vers l'aval le brin transversal qui est reçu dans l'encoche amont des dites deux encoches adjacentes, chevauche le brin longitudinal qui prolonge vers l'aval le brin transversal qui est reçu dans l'encoche aval des dites deux encoches adjacentes ;
- dans la deuxième couche de conducteurs, et dans deux encoches adjacentes du support linéaire qui reçoivent chacune un brin transversal du conducteur associé, le brin longitudinal qui prolonge vers l'amont le brin transversal qui est reçu dans l'encoche aval des dites deux encoches adjacentes, chevauche le brin longitudinal qui prolonge vers l'amont le brin transversal qui est reçu dans l'encoche amont des dites deux encoches adjacentes ;
- chaque conducteur comporte une paire de fils conducteurs électriquement qui sont adjacents ;
- pour chaque conducteur, les deux fils forment des ondulations axiales complémentaires qui sont imbriquées transversalement, de manière que l'un des deux fils soit situé transversalement dessus l'autre.

D'autres caractéristiques et avantages de l'invention apparaîtront à la lecture de la description détaillée qui suit pour la compréhension, aux figures annexées et aux revendications.

### Brève description des dessins annexés

- la figure 1 est une vue partielle en perspective de l'intérieur d'un stator dans lequel les fils conducteurs sont déposés conformément à l'invention ;
- la figure 2 est une vue en bout du corps de stator représenté à la figure 1 ;
- la figure 3 est un développement linéaire de deux fils conducteurs formant un enroulement, montrant la position axiale des deux fils l'un par rapport à l'autre ;
- la figure 4 est une représentation schématique en perspective d'une installation pour la mise en oeuvre de la première étape de dépose des fils sur le support linéaire ;
- la figure 5 est une représentation schématique des deux couches de conducteurs obtenues à l'issue de la première étape de dépose, permettant d'obtenir chacune un même nombre de spires ;
- la figure 6 est une vue latérale de l'agencement des couches de conducteurs représentées à la figure 5 sur le support linéaire ;
- la figure 7 est une vue similaire à celle de la figure 5, dans laquelle les couches de conducteurs permettent d'obtenir des nombres différents de spires ;
- la figure 8 est une vue latérale de l'agencement des couches de conducteurs représentées à la figure 7 sur le support linéaire ;
- la figure 9 est une vue en détail de l'agencement de deux fils formant un même conducteur sur le support linéaire, montrant la position relative des tronçons des deux fils les uns par rapport aux autres ;
- la figure 10 est une représentation schématique en perspective des deux fils représentés à la figure 9 ;
- la figure 11 est une représentation schématique d'une couche de conducteurs représentée aux figures 5 et 7, montrant le sens de pliage des conducteurs ;
- la figure 12 est une représentation schématique d'une installation pour la mise en oeuvre de la première étape de transfert ;
- la figure 13 est une vue en perspective et à plus grande échelle de l'installation représentée à la figure 12 ;
- la figure 14 est une représentation schématique du support annulaire représenté aux figures 12 et 13 ;
- la figure 15 est un détail à plus grande échelle de l'installation représentée la figure 12, montrant le transfert des fils conducteurs par l'intermédiaire des guides latéraux ;
- la figure 16 est une représentation schématique en perspective de deux fils conducteurs qui ont été transférés sur le support annulaire à l'issue de la première étape de transfert, montrant la position relative des tronçons des deux fils les uns par rapport aux autres ;
- la figure 17 est une représentation schématique en perspective de l'installation de mise en oeuvre de la deuxième étape de transfert, dans laquelle les lames d'extraction sont représentées en position initiale ;
- la figure 18 est une vue similaire à celle de la figure 17, dans laquelle les lames d'extraction sont représentées en position finale pour laquelle le bobinage a été transféré sur le corps ;
- la figure 19 est une représentation schématique de deux conducteurs formant un même enroulement, qui sont en position montée sur le support linéaire, montrant la différence de longueur des tronçons longitudinaux formant des spires différentes.

### Description détaillée de modes de réalisation préférés

Pour la description de l'invention, on adoptera à titre non limitatif les orientations selon les repères indiqués aux figures.

Dans la description qui va suivre, des éléments identiques, similaires ou analogues seront désignés par les mêmes chiffres de référence.

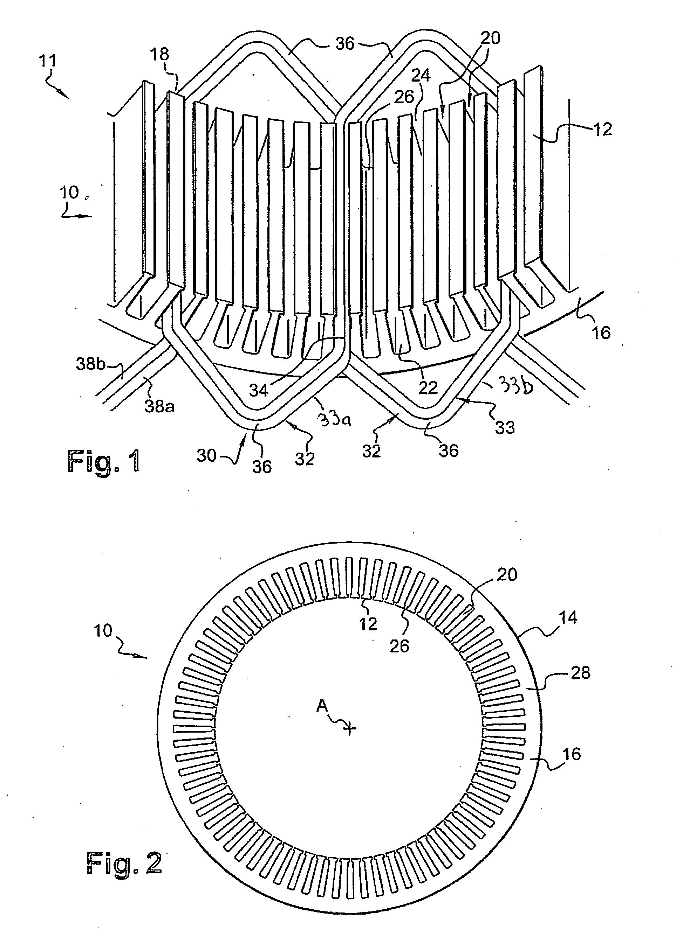

On a représenté à la figure 1 une vue partielle d'un stator 11 polyphasé de machine électrique tournante qui comporte principalement un corps 10 dans lequel sont montés plusieurs enroulements de phase 30, qui constituent le bobinage du stator. Ce stator 11 est destiné à entourer un rotor (non représenté pour plus de clarté) que comporte la machine électrique tournante

Ici, le corps 10 est réalisé de manière qu'il soit apte à recevoir six enroulements de phase 30 analogues, et un seul enroulement de phase 30 a été représenté à la figure 1.

La machine tournante est par exemple un alternateur ou un alterno-démarreur du type polyphasé. Cette machine est de préférence destinée à être mise en oeuvre dans un véhicule automobile.

On rappelle qu'un alterno-démarreur est une machine électrique tournante apte à travailler de manière réversible, d'une part, comme générateur électrique en fonction alternateur, et d'autre part comme moteur électrique, notamment pour démarrer le moteur thermique du véhicule automobile. Un tel alterno-démarreur est décrit par exemple dans le document WO-A-01/69762 auquel on se reportera pour plus de précisions.

Ainsi dans un mode de réalisation le rotor de la machine électrique tournante est un rotor à griffes, en variante un rotor à pôles saillants comme décrit dans ce document WO-A-01/69762 auquel on se rapportera pour plus de précisions.

On a représenté à la figure 2 le corps 10 du stator 11 représenté à la figure 1. Le corps 10 a une forme cylindrique annulaire d'axe de symétrie axiale "A" et il consiste en un empilement axial de tôles planes pour diminuer les courants de Foucault. Le corps 10 est ainsi communément appelé "paquet de tôles".

L'axe A constitue également l'axe de symétrie axial du rotor et de la machine électrique tournante du type polyphasé, sachant qu'un faible entrefer existe entre la périphérie interne du stator 11 et la périphérie externe du rotor de la machine électrique tournante.

Par la suite, les orientations dirigées de manière orthogonale à l'axe "A" et qui sont sécantes avec l'axe "A" seront qualifiées d'orientations radiales. Les orientations orthogonales à la fois à l'axe "A" et à une orientation radiale seront qualifiées d'orientations transversales.

Le corps 10 est de forme annulaire et est délimité radialement par une face cylindrique interne 12 et par une face cylindrique externe 14, et il est délimité axialement par une face radiale d'extrémité axiale inférieure 16 et par une face radiale d'extrémité axiale supérieure 18 (figure 1).

Les faces 12 et 14 constituent respectivement la périphérie interne et la périphérie externe du corps 10.

Ici les faces 12 et 14 sont cylindriques le corps 10 étant fixé dans le carter de la machine à l'aide de vis ou de tirants comme décrit dans le document WO-A-01/69762. En variante seul la face 12 est cylindrique, la face 14 étant en variante par exemple en forme de tonneau. Cette face 14 peut comporter des oreilles saillantes pour sa fixation au carter de la machine.

Le corps 10 est ici de forme cylindrique à sa périphérie interne.

Ce corps 10 comporte des encoches d'orientation axiales 20 qui débouchent axialement dans les faces radiales d'extrémité axiales inférieure 16 et supérieure 18 du corps 10 par l'intermédiaire d'orifices axiaux avant 22 et arrière 24.

Les encoches 20 sont ici du type semi fermé et sont donc ouvertes radialement dans la face cylindrique interne 12 du corps 10 par l'intermédiaire d'une rainure axiale 26 qui s'étend depuis la face radiale inférieure 16 jusqu'à la face radiale supérieure 18. La largeur transversale de chaque rainure axiale 26 est inférieure à la largeur de l'encoche 20 associée.

Les encoches 20 sont toutes identiques et elles sont par exemple au nombre de soixante-douze. Elles sont réparties angulairement de manière régulière autour de l'axe "A" du corps 10.

Ainsi lorsque le rotor de la machine est un rotor à griffes comportant de manière connue deux roues polaires, chaque roue polaire comporte six griffes. Le rotor comporte donc douze pôles à raison de un pôle par griffe et le corps 10 du stator 11 porte six phases.

Les encoches 20 sont ici à bords parallèles, présentent un fond et sont donc sont borgnes.

La portion annulaire externe pleine du corps 10 dans laquelle les encoches 20 ne s'étendent pas, est appelée culasse 28.

Pour former le stator 1 1 , plusieurs enroulements de phase 30 sont montés dans le corps 10 pour former le bobinage du stator 11.

L'invention sera décrite en référence à un stator 11 dont le bobinage comporte six enroulements de phase 30, aussi appelé stator "hexaphasé".

L'invention est cependant applicable à des stators comportant un nombre différent d'enroulements de phase, et notamment à des stators "triphasés" comportant trois enroulements de phase 30. Le corps 10 comporte alors par exemple trente-six encoches 20 lorsque le rotor à griffes comporte 12 griffes ou quarante-huit encoches 20 lorsque le rotor à griffes comporte 16 griffes.

Le nombre d'encoches est un multiple du nombre de griffes du rotor ou d'une manière générale du nombre de pôles du rotor.

Dans l'art antérieur on a déjà proposé de réaliser les enroulements à l'aide de segments conducteurs reliés entre eux par soudage. Cette solution favorise un fort taux de remplissage des encoches 20 mais fait appel à de nombreuses opérations de soudage.

Dans la présente invention on évite ces nombreuses opérations de soudage tout en conservant les avantages d'une solution à segments conducteurs, notamment fort taux de remplissage des encoches, faible taux d'ondulation du courant induit, bonne évacuation de la chaleur et faible bruit acoustique.

En outre le procédé de réalisation du stator selon l'invention est plus flexible et demande des temps de changement de série peu élevé.

Dans l'invention chaque enroulement de phase 30 comporte des spires ondulées 32 formées par un conducteur 33 d'électricité, qui sont empilées radialement.

Plus précisément chaque conducteur 33 est monté de manière ondulée dans les encoches 20 ici à bords parallèles et chaque spire 32 correspond à un tour du corps 10.

Dans l'exemple de réalisation représenté chaque enroulement de phase 30 et donc un conducteur 33 est composé de deux fils 38a, 38b en parallèle.

Ainsi qu'on le sait un conducteur 33 comporte un élément électriquement conducteur, par exemple en cuivre, entouré par au moins une couche électriquement isolante, telle que de l'émail.

On a représenté à la figure 1 seulement deux spires 32 d'un enroulement de phase 30, il sera compris que l'enroulement 30 peut comporter un plus grand nombre de spires 32.

Chaque spire 32 consiste en une paire de spire puisqu'un conducteur 33 est composé de deux fils.

Chaque conducteur 33 comporte une série de tronçons ou brins axiaux 34 qui sont reçus dans une série d'encoches associées 20.

Chaque conducteur 33 comporte aussi des tronçons ou brins de liaison 36 d'orientation globalement transversale, qui relient les tronçons axiaux consécutifs 34 de l'enroulement 30, et qui s'étendent alternativement en saillie par rapport à la face d'extrémité axiale supérieure 18 et en saillie par rapport à la face d'extrémité axiale inférieure 16 pour former des chignons.

Les tronçons de liaison 36 ont ici une forme globalement en forme de V

Les encoches 20 d'une série d'encoches reçoivent les tronçons axiaux 34 des conducteurs 33 appartenant à un enroulement de phase 30.

Bien entendu, de manière connue, un isolant d'encoche, non représenté pour plus de clarté, est interposé entre les tronçons 34 et les bords des encoches 20 pour notamment éviter de blesser les conducteurs 33 lors de leur montage dans les encoches 20.

Chaque série d'encoches 20 est associée à un des six enroulements de phase 30. Deux encoches consécutives 20 d'une série d'encoches 20 sont séparées par des encoches adjacentes 20 correspondant chacune à une autre série d'encoches 20 associée à l'un des cinq autres enroulements de phase 30.

Ainsi, pour un stator hexaphasé comme c'est le cas à la figure 1, cinq encoches 20 adjacentes sont laissées libres entre deux encoches 20 de chaque série. En d'autres termes les conducteurs 33 d'un enroulement sont insérés dans une encoche 20 sur six encoches adjacentes 20.

Ainsi pour un stator comportant N enroulements de phases 30, les tronçons axiaux 34 d'une spire 32 sont reçus dans une encoche 20 sur N encoches adjacentes 20.

Ici s'agissant d'un stator à 72 encoches et six phases, le tronçon 34 d'une spire 32 est reçu dans l'encoche 1 et le tronçon 34 suivant du même enroulement 30 dans l'encoche 7 et ainsi de suite.

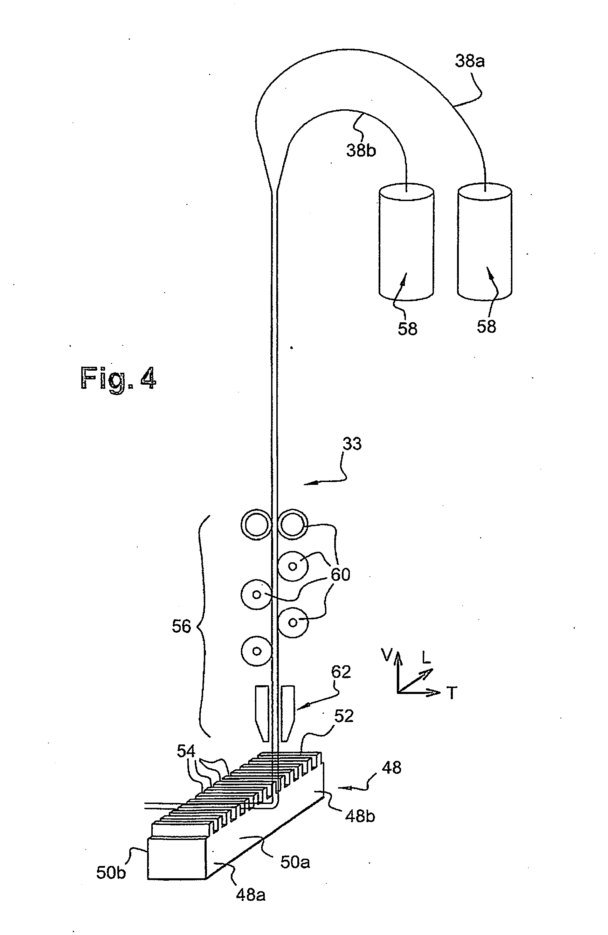

Le stator 11 est réalisé selon un procédé qui sera décrit par la suite en référence aux figures 4 et suivantes.

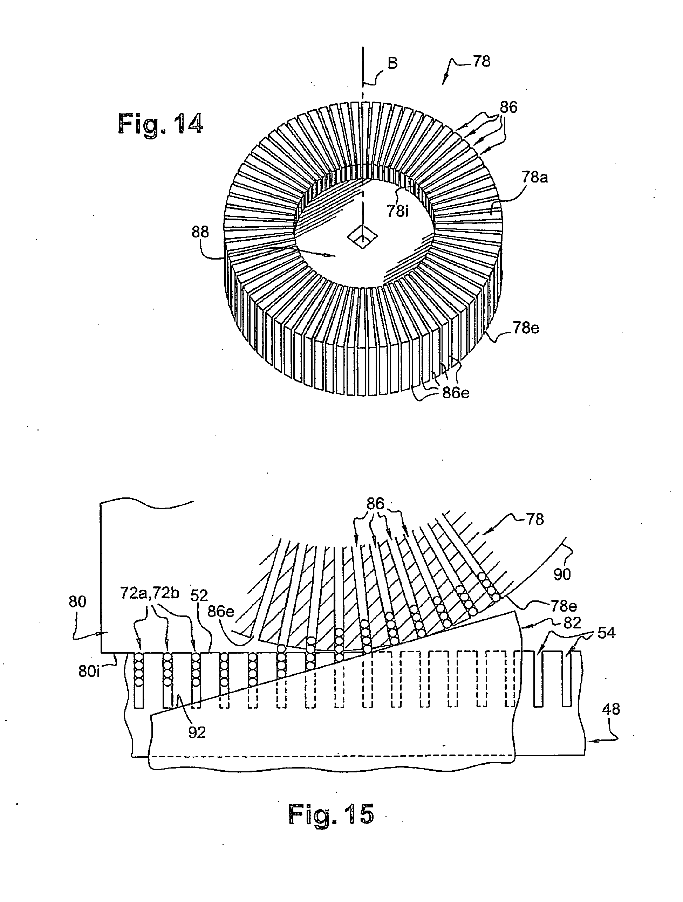

Ce procédé de réalisation comporte successivement une étape de dépose des conducteurs 33 formant les spires 32 sur un support linéaire 48, mieux visible à la figure 4, pour former les brins longitudinaux 34 et les brins de liaison 36, une première étape de transfert des conducteurs 33 déposés sur le support linéaire 48 vers un support annulaire 78, mieux visible à la figure 14, pour former les spires 32, et une deuxième étape de transfert des spires formées 32 sur le support annulaire 78 vers le corps 10.

On a représenté à la figure 4 une installation pour la mise en oeuvre de l'étape de dépose des conducteurs 33 sur le support linéaire 48.

Dans la description de l'installation qui va suivre, on adoptera à titre non limitatif les orientations verticale, longitudinale et transversale selon le repère V, L, T indiqué à la figure 4.

Le support linéaire 48 consiste en un élément globalement parallélépipédique d'orientation principale longitudinale, et il est notamment délimité par deux faces latérales 50a, 50b longitudinales verticales et une face supérieure 52 horizontale.

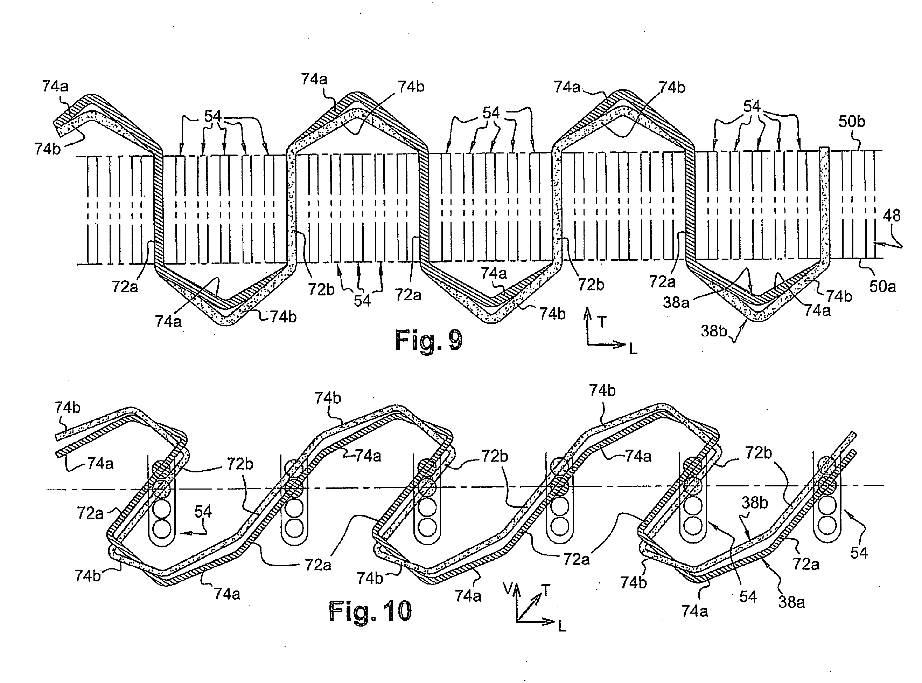

La face supérieure 52 du support linéaire 48 comporte des encoches transversales 54, qui débouchent transversalement dans les faces latérales 50a, 50b du support linéaire 48 et qui sont réparties longitudinalement selon un pas constant le long du support linéaire 48. Les encoches 54 sont à bords parallèles et présentent un fond arrondi (Figure 9) adapté à la forme des fils 38a, 38b ici de section circulaire.

L'installation comporte une tête de dépose 56 associée à chaque conducteur 33 et qui permet de déposer les deux fils 38a, 38b d'un conducteur 33 associé sur le support linéaire 48. Ici, par souci de clarté, on a représenté à la figure 4 une seule tête de dépose 56, en association avec un seul conducteur 33, cependant, les têtes de dépose 56 étant identiques, il sera compris que la description qui va suivre d'une tête 56 s'applique par similitude aux autres têtes de dépose 56.

La tête de dépose 56 comporte un ensemble de galets 60 qui permettent de réaliser l'entraînement du conducteur 33 et une buse guide fil 62 au travers de laquelle le conducteur 33 sort de la tête de dépose 56. Cette buse 62 est conformée pour déposer le conducteur 33 sur le support linéaire 48 en formant les brins axiaux 34 et les brins de liaison 36.

Enfin, l'installation comporte un conteneur 58 d'alimentation de la tête 56 duquel provient le conducteur 33 associé tel qu'une bobine de fil par exemple.

Ainsi à chaque conducteur 33 il est prévu deux conteneurs 58 à raison de un conteneur 58 par fils 38a, 38b.

L'étape de dépose des conducteurs 33 comporte une première phase de dépose au cours de laquelle chaque tête de dépose 56 dépose le conducteur 33 associé sur le support linéaire 48 de manière à former une première couche de conducteurs 33, et une deuxième phase de dépose, qui est postérieure à la première phase de dépose et au cours de laquelle chaque tête de dépose 56 dépose le conducteur 33 associé sur le support linéaire 48 pour former une deuxième couche de conducteurs 33 qui est superposée verticalement sur la première couche de conducteurs 33.

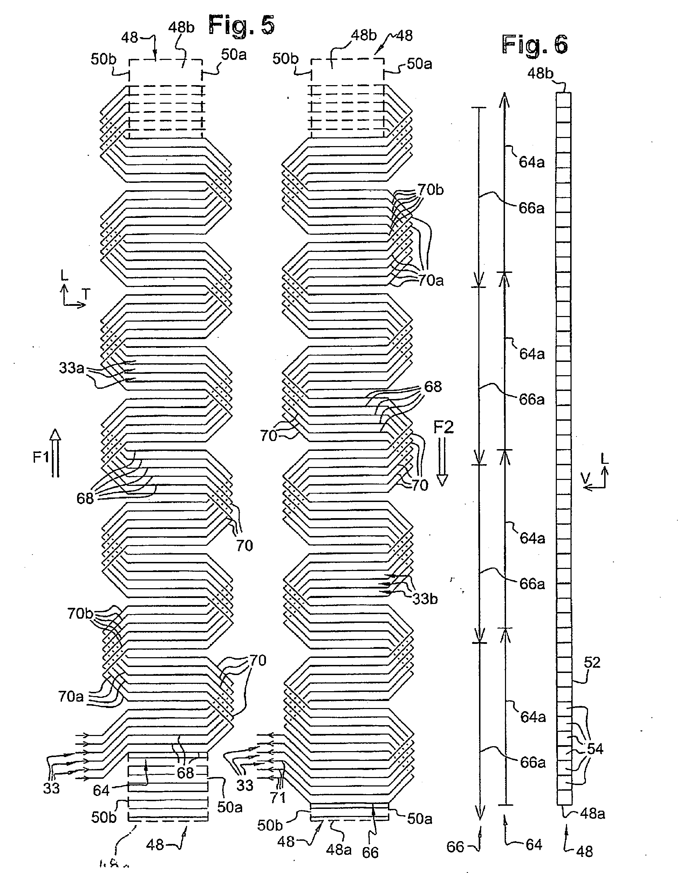

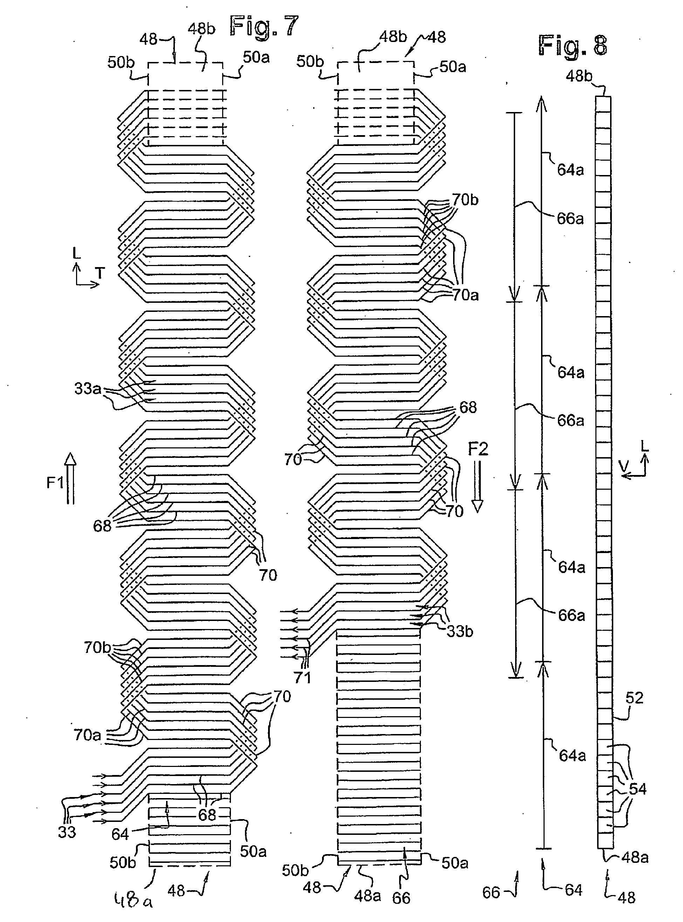

On a représenté aux figures 5 et 7, les deux couches 64, 66 de conducteurs 33, qui sont obtenues à l'issue à l'étape de dépose des conducteurs 33, la référence 64 désignant la première couche et la référence 66 la deuxième couche superposée verticalement sur la première couche 64.

Par souci de clarté des figures, les deux couches 64, 66 sont représentées décalées transversalement l'une par rapport à l'autre et on a représenté dans ces figures que les extrémités 48a, 48b du support 48.

Au cours de chaque phase de dépose, les têtes de dépose 56 se déplacent par rapport au support linéaire 48 selon une trajectoire globalement sinusoïdale, de manière à déposer chaque conducteur 33 dans des encoches 54 (Figures 4, 6, 8) du support linéaire 48 qui sont associées au conducteur 33.

Ainsi, au cours des deux phases de dépose, les têtes de dépose 56 remplissent successivement les encoches 54 du support linéaire 48 en formant des tronçons transversaux 68 (Figures 5 et 7) qui sont introduits dans les encoches 54 (Figures 6 et 8), et des tronçons longitudinaux latéraux 70 (Figures 5 et 7), qui sont agencés transversalement de part et d'autre du support linéaire 48, en vis-à-vis de chacune des faces latérales 50a, 50b. Les tronçons 70 ont globalement une forme en V.

Aussi, dans chacune des deux couches 64, 66, chaque conducteur 33 forme des ondulations, ou ondulations longitudinales, comportant successivement un tronçon transversal 68 qui est reçu dans une encoche 54 associée, un tronçon longitudinal 70 qui s'étend transversalement en vis-à-vis de la face latérale droite 50a du support linéaire 48, un tronçon transversal 68 consécutif, qui est reçu dans une encoche 54 associée consécutive, un tronçon longitudinal 70, qui s'étend en vis-à-vis de la face latérale gauche 50b du support linéaire 48.

Chaque tronçon longitudinale 70 qui s'étend en vis-à-vis de la face latérale droite 50a du support linéaire 48 relie les extrémités libres de droite de deux tronçons transversaux 68 consécutifs. De la même manière, chaque tronçon longitudinal 70 qui s'étend en vis-à-vis de la face latérale gauche 50b du support linéaire 48 relie les extrémités de gauche de deux tronçons transversaux 68 consécutifs.

De plus, les tronçons longitudinaux 70 sont agencés alternativement de part et d'autre du support linéaire 48, c'est-à-dire qu'ils sont décalés longitudinalement d'un pas équivalent à la distance entre deux tronçons transversaux 68 consécutifs.

Ainsi le conducteur 33 est enroulé de manière ondulée sur le support 48.

Les tronçons 68, 70 sont destinés à former ultérieurement respectivement les tronçons ou brins 34, 36 du stator 11 de manière décrite ci-après.

D'une manière similaire à celles du corps 10 du stator 11, les encoches 54 du support linéaire 48 sont associées à un conducteur 33 d'un enroulement de phase 30 par ensembles d'encoches 54.

Ainsi, deux encoches 54 consécutives d'un même ensemble d'encoches 54 sont séparées par des encoches 54 dont chacune appartient à l'un des autres ensembles d'encoches 54.

De plus, les encoches 54 de chaque ensemble d'encoche 54 sont réparties sur le support linéaire 48 à un pas constant égal au nombre d'enroulement des phase 30, c'est-à-dire ici avec un pas de six encoches.

Le nombre d'encoches 54 du support linéaire 48 est déterminé en fonction du nombre de spires 32 de chaque enroulement de phases 30, et en fonction du nombre d'encoches du corps 10, de manière que chaque portion de chaque conducteur 33, qui forme l'une des deux couches de conducteur 64, 66 permette de former un nombre entier de spires 32 de l'enroulement de phase 30 associé.

Ici, le nombre d'encoches 54 du support linéaire 48 est déterminé de manière que la portion de chaque couche 64, 66 de conducteurs 33 permettent de former un nombre maximum de quatre spires 32.

Comme on l'a dit plus haut, chaque phase de dépose de l'étape de dépose consiste, pour chaque tête de dépose 56, à déposer progressivement le conducteur 33 sur le support linéaire 48.

Conformément à l'invention, l'étape de dépose consiste, pour chaque enroulement de phase 30, à déposer un même conducteur 33 sur le support linéaire 48 lors de la première phase de dépose et lors de la deuxième phase de dépose.

Par conséquent, chaque enroulement de phase 30 est réalisé à partir d'un seul conducteur 33 continu, qui comporte un premier tronçon 33a formant en partie la première couche 64 inférieure, et un deuxième tronçon 33b formant en partie la deuxième couche 66 supérieure, et dont les deux tronçons 33a, 33b du conducteur 33 sont reliés entre eux au niveau de l'extrémité longitudinale aval du support linéaire 48.

Conformément à un autre aspect de l'invention, la première phase de dépose consiste à introduire progressivement les tronçons transversaux 68 du premier tronçon 33a de chaque conducteur 33 depuis une première encoche 54 associée située au niveau de l'extrémité longitudinale amont 48a du support linéaire 48, jusqu'à une dernière encoche 54 associée située au niveau de l'extrémité aval 48b du support linéaire 48, c'est-à-dire de l'amont vers l'aval, comme on l'a représenté par la flèche F1.

La deuxième phase de dépose consiste à introduire progressivement les tronçons transversaux 68 du deuxième tronçon 33b de chaque conducteur 33 en sens inverse, c'est-à-dire de l'aval vers l'amont, comme on l'a représenté par la flèche F2, depuis une encoche 54 associée située au niveau de l'extrémité aval 48b du support linéaire 48, jusqu'à une encoche 54 associée située au niveau de l'extrémité amont 48a du support linéaire 48, lorsque la deuxième couche 66 de conducteurs permet de former le même nombre de spires que la première couche 64.

Par contre, lorsque la deuxième couche 66 de conducteurs 33 est réalisée de manière qu'elle permet de former un nombre de spires de l'enroulement 30 inférieur au nombre de spires formées à partir de la première couche 64 de conducteurs 33, comme on peut le voir aux figures 7 et 8, la deuxième phase de dépose consiste à introduire progressivement les tronçon transversaux 68 du deuxième tronçon 33b de chaque conducteur 33 depuis une encoche 54 associée située au niveau de l'extrémité aval 48b du support linéaire 48, jusqu'à une encoche 54 intermédiaire.

De plus, la deuxième phase de dépose est mise en oeuvre après la première phase de dépose, de manière que l'étape de dépose est mise en oeuvre de manière continue, pour former la première puis la deuxième couche 64, 66 de conducteurs 33.

La dépose de chaque conducteur 33 sur le support linéaire 48 par le procédé selon l'invention permet ainsi de réduire les temps d'inactivité de l'installation entre les deux phases de dépose.

En effet, l'étape de dépose selon l'invention ne comporte pas de phase intermédiaire au cours de laquelle les têtes de dépose se déplacent de l'aval vers l'amont pour que la deuxième phase de dépose débute au niveau de l'extrémité amont du support linéaire 48.

De plus, puisque l'étape de dépose consiste à déposer un seul conducteur 33 pour former chaque enroulement de phase 30, chaque enroulement de phase 30 ne comporte alors que deux brins libres d'extrémité 71 pour son raccordement électrique.

Enfin, comme on peut le voir aux figures 5 et 7, le mouvement effectué par les têtes de dépose 66 pendant l'étape de dépose, débute et se termine au niveau de l'extrémité amont du support linéaire 48. par conséquent, les deux brins d'extrémité 71 de chaque enroulement de phase 30 sont situés à proximité l'un de l'autre.

Selon un autre aspect de l'étape de dépose selon l'invention, les conducteurs 33 sont déposés sur le support linéaire 48 de manière que chaque enroulement de phase 30 obtenu à l'issue du procédé selon l'invention soit du type ondulé réparti.

Un enroulement de phase 30 qui est du type ondulé réparti est caractérisé par le fait qu'entre deux encoches 20 associées consécutives du corps 10, au moins une première spire 32 de l'enroulement de phase 30 comporte une branche transversale 36 reliant les extrémités supérieures des branches axiales 34 de la spire 32, qui sont reçues dans lesdites encoches 20 consécutives associées, et au moins une deuxième spire 32 de l'enroulement de phase 30 comporte une branche transversale 36 reliant les extrémités inférieures des branches axiales 34 de la deuxième spire 32, qui sont elles aussi reçues dans ces encoches 20 consécutives associées.

Pour former un tel enroulement de phase 30 du type ondulé réparti, et comme on peut le voir aux figures 5 et 7, chaque phase de dépose consiste à former les deux couches de conducteurs 64, 66 de manière qu'au niveau de deux encoches 54 consécutives du support linéaire 48, qui sont associées à un conducteur 33, chacune de ces deux encoches 54 reçoit un tronçon transversal 68 de chaque tronçon 33a, 33b du conducteur 33.

De plus, les deux tronçons transversaux 68 du premier tronçon 33a du conducteur 33, qui sont reçus dans les deux encoches 54, sont reliés entre eux par un tronçon longitudinal 70 qui est agencé à un coté du support linéaire 48, et les deux tronçons transversaux 68 du deuxième tronçon 33b du conducteur 33, qui sont reçus dans les deux encoches 54, sont reliés entre eux par un tronçon longitudinal 70 qui est agencé de l'autre coté du support linéaire 48.

Comme on l'a dit plus haut l'installation pour la dépose des conducteurs 33 sur le support linéaire 48 comporte une tête de dépose 56 pour chaque conducteur 33.

Selon encore un autre aspect du procédé conforme à l'invention, l'étape de dépose consiste à déposer tous les conducteurs 33 sur le support linéaire 48 de manière simultanée.

Ainsi, lors de l'étape de dépose, toutes les têtes de dépose 56 effectuent simultanément les mêmes mouvements.

Par conséquent, les premiers tronçons 33a des conducteurs 33, qui forment la première couche 64 de conducteurs 33, sont tous parallèles les uns aux autres, et les deuxièmes tronçons 33b des conducteurs 33, qui forment la deuxième couche 66 de conducteurs 33 sont tous parallèles les uns aux autres.

Les premiers tronçons 33a des conducteurs 33 forment ainsi un premier faisceau, ou nappe de conducteurs 33, et les deuxièmes tronçons 33b des conducteurs 33 forment un deuxième faisceau ou nappe de conducteurs 33.

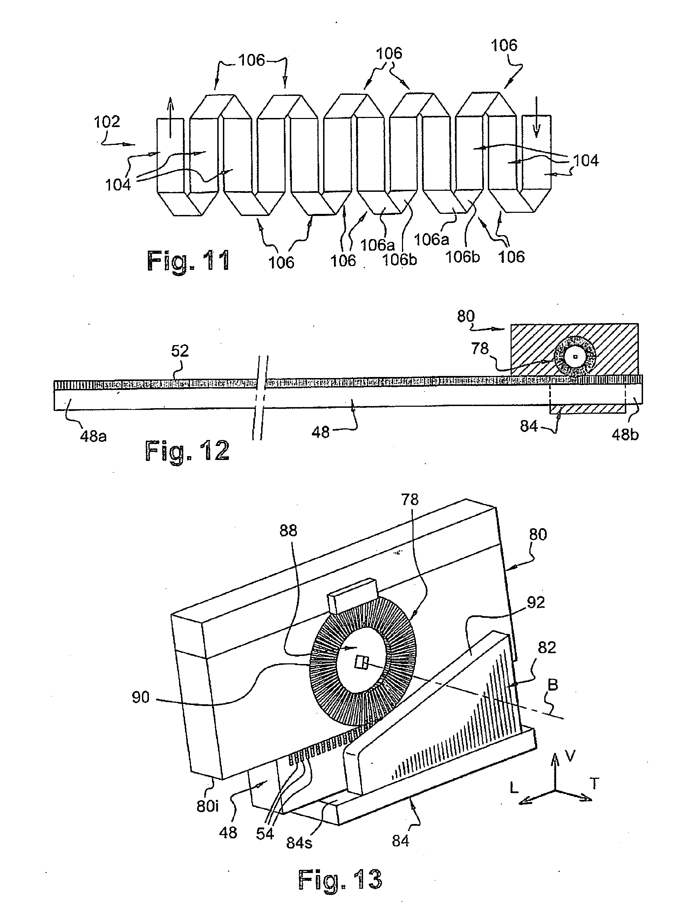

On a représenté schématiquement à la figure 11 une telle nappe 102 de conducteurs 33, qui est en forme d'une bande sinusoïdale comportant une succession de tronçons transversaux 104 comportant chacun un tronçon transversal 68 (Figures 5 et 7) de chaque conducteur 33, et de tronçons latéraux 106 comportant chacun un tronçon longitudinal 70 (Figures 5 et 7) de chaque conducteur 33.

Ici, la nappe 102 qui est représenté à la figure 11 est la nappe 102 formant la deuxième couche 66 de conducteurs 33.

Le déplacement des têtes de dépose 56 par rapport au support linéaire 48, pendant chacune des phases de dépose est déterminé de manière que les tronçons 68, 70 des conducteurs 33, qui forment chaque tronçon 104, 106 de la nappe 102 sont déposés simultanément sur le support linéaire.

De plus, le déplacement des têtes de dépose 66 par rapport au support linéaire 48 est déterminé de manière qu'à l'issue de l'étape de dépose, les tronçons latéraux 106 de chaque nappe 102 sont tous pliés dans le même sens, c'est-à-dire qu'une portion aval 106a de chaque tronçon latéral 106 est replié dessus une portion amont 106b du tronçon latéral 106.

Par conséquent, comme on peut le voir aux figures 5 et 7 les tronçons longitudinaux 70 des conducteurs 33, qui forment chaque tronçon latéral 106 de la nappe 102, sont eux aussi pliés dans le même sens.

De plus, dans la première couche 64 de conducteurs 33, la portion aval 70b de chaque tronçon longitudinal 70 est agencée verticalement au dessus des portions amont 70a des autres tronçons longitudinaux 70, qui sont situés en aval dudit tronçon longitudinal 70 considéré.

Par contre, dans la deuxième couche 66 de conducteurs 33, la portion amont 70a de chaque tronçon longitudinal 70 est agencée verticalement au dessus des portions aval 70b des autres tronçons longitudinaux 70 qui sont situés en amont dudit tronçon longitudinal 70 considéré.

Conformément à encore un autre aspect de l'invention, pendant chacune des deux phases de dépose chaque tête de dépose 56 dépose simultanément deux fils 38a, 38b sur le support linéaire 48, de manière que chaque conducteur 33 est formé par les deux fils 38a, 38b déposés par la tête de dépose 56 associée.

Lors de chacune des deux phases de dépose des conducteurs 33, le déplacement des têtes de dépose 56 par rapport au support linéaire 48 est déterminé de manière que les deux fils 38a, 38b de chaque conducteur 33 soient décalés transversalement l'un par rapport à l'autre dans chaque couche 64, 66 du conducteur 33.

Ainsi, comme on peut le voir aux figures 9 et 10, un premier fil 38a du conducteur 33 est agencé transversalement à gauche du deuxième fil 38b du même conducteur 33 et ce de manière alternée.

Selon un autre aspect du support linéaire 48, et comme on peut le voir plus en détails à la figure 10, la largeur de chaque encoche 54, mesurée selon la direction longitudinale, est globalement égale à l'épaisseur de chacun des deux fils 38a et 38b.

Par conséquent, dans chaque encoche 54 du support linéaire 48, les brins 72a, 72b des fils 38a, 38b qui sont reçus dans cette encoche sont superposés verticalement l'un sur l'autre.

Selon encore un autre aspect de l'invention, les brins 72a, 72b des fils 38a, 38b sont agencés alternativement l'un dessus l'autre dans les encoches 54 associées du support linéaire 48, c'est-à-dire que dans une première encoche 54 associée, le brin 72a du premier fil 38a, qui est reçu dans cette encoche 54, est agencé verticalement au-dessus du brin 72b du deuxième fil 38b qui est reçu dans cette même encoche 54.

De plus, dans une deuxième encoche 54 associée, qui est consécutive à la première encoche 54 associée, le brin 72a du premier fil 38a, qui est reçu dans cette deuxième encoche associée 54, et agencé verticalement au-dessous du brin 72b du deuxième fil 38b qui est reçu dans cette deuxième encoche associée 54.

Ainsi, lorsque l'on regarde latéralement chaque couche 64, 66 du conducteur 33, les brins longitudinaux 74a, 74b qui relient les brins transversaux 72a, 72b qui sont reçus dans deux encoches 54 adjacentes, se croisent.

Cependant, comme on l'a dit plus haut, les deux fils 38a, 38b sont décalés transversalement l'un par rapport à l'autre dans chaque couche 64, 66.

Par conséquent, les deux brins longitudinaux 74a, 74b ne se superposent pas verticalement.

Du fait que les deux fils 38a, 38b de chaque conducteur 33 sont décalés transversalement l'un par rapport à l'autre, la longueur des brins longitudinaux 74a, 74b des fils 38a, 38b reliant les brins transversaux 72a, 72b qui sont reçus dans deux encoches 54 associées consécutives, sont de longueurs différentes.

Par exemple ici, comme on peut le voir à la figure 9, le premier fil 38a est agencé transversalement à gauche du deuxième fil 38b.

Il en résulte que la longueur du brin longitudinal 74a du premier fil 38a, qui est agencé en vis-à-vis de la face latérale droite 50a du support linéaire 48 et qui relie deux brins transversaux 72a reçus dans deux encoches 54 associées consécutives, est plus faible que la longueur du brin longitudinal 74b du deuxième fil qui est lui aussi agencé en vis-à-vis de la face latérale droite 50a du support linéaire 38 et qui relie les deux brins transversaux 72b du deuxième fil 38b reçus dans ces deux mêmes encoches 54 consécutives associées.

Par contre, la longueur du brin longitudinal 74a qui est agencé en vis-à-vis de la face latérale gauche 50b du support linéaire 48 et qui relie deux brins transversaux 72a du premier fil 38a reçus dans deux encoches associées consécutives, est de longueur plus importante que le brin longitudinal 74b du deuxième fil 38b, qui relie les brins transversaux 72b du deuxième fil 38b reçus dans ces deux même encoches.

Ainsi qu'il ressort de ce qui précède la première phase de dépose et la deuxième phase de dépose consistent chacune, pour chaque conducteur 33, à remplir successivement les encoches 54 du support linéaire 48 qui sont associées au conducteur 33, en introduisant un brin transversal 68 globalement rectiligne du conducteur (33) dans une encoche 54 associée, en pliant et/ou cintrant le conducteur 33 pour former un brin longitudinal 70 qui est situé transversalement en vis-à-vis d'une face longitudinale verticale latérale 50a, 50b du support linéaire, et en introduisant un brin transversal 68 consécutif dans une encoche 54 associée consécutive, de manière que le conducteur 33 forme des ondulations longitudinales comportant une succession de brins transversaux 68 qui sont reçus dans les encoches associées 54 et de brins longitudinaux 70 qui sont agencés alternativement de part et d'autre du support linéaire 48.

Comme on l'a dit plus haut, le procédé de réalisation du stator selon l'invention comporte une première étape de transfert des conducteurs 33, qui ont été déposés sur le support linéaire 48 lors de l'étape de dépose, vers un support annulaire, de manière à former les spires 32 des enroulements de phase 30.

On a représenté aux figures 12 à 15, une installation pour la mise en oeuvre de la première étape de transfert, qui comporte le support annulaire 78, un carter 80 de guidage du support annulaire 78 en déplacement par rapport au support linéaire 48, deux guides longitudinaux 82 et un socle inférieur 84.

Dans ce mode de réalisation les guides 82 sont solidaires du socle 84.

Comme on peut le voir plus en détails à la figure 14, le support annulaire 78 est un élément de révolution d'axe principal B transversal, qui est délimité radialement à sa périphérie externe par une face cylindrique externe 78e et à sa périphérie interne par une face cylindrique interne 78i. Ce support 78 est délimité axialement par deux faces radiales d'extrémité axiale 78a et comporte des encoches axiales 86 réalisées dans la face cylindrique externe 78e du support annulaire 78 et débouchant axialement dans les faces radiales d'extrémité axiale 78a du support annulaire 78.

Le diamètre externe du support 78 est globalement égal au diamètre interne du corps 10 en sorte que le support 78 puisse pénétrer à l'intérieur du corps 10, un faible entrefer existant alors entre la périphérie externe du support 78 et la périphérie interne du corps 10.

La distance entre les extrémités radiales externes 86e de deux encoches 86 adjacentes du support annulaire 78 est égale à la distance entre deux encoches 54 adjacentes du support linéaire 48.

Le nombre d'encoches 86 du support annulaire 78 est égal au nombre d'encoches 20 du corps 10 de stator 11, c'est-à-dire qu'ici le support annulaire 78 comporte soixante-douze encoches 86.

Le support annulaire 78 comporte enfin un moyeu central 88 qui est fixé à la face cylindrique interne 78i du support annulaire 78 et qui permet l'entraînement en rotation du support annulaire 78 autour de son axe principal B lors de la première étape de transfert.

La longueur axiale du moyeu central 88, mesurée par rapport à l'axe principal B du support annulaire 78, est inférieure à la distance entre les deux faces radiales d'extrémité axiale 78a du support annulaire 78.

De plus, le moyeu central 88 est agencé axialement suivant l'axe B du support annulaire 78 globalement au milieu du support annulaire 78, en retrait par rapport à chacune des deux faces radiales 78a du support annulaire 78.

Par conséquent, chaque encoche 86 du support annulaire 78 débouche radialement dans la face cylindrique interne 78i du support annulaire 78, de part et d'autre du moyeu central 88.

Ainsi le support 78 comporte un moyeu central 88 et deux anneaux (non référencés) solidaires en rotation du moyeu 88 et s'étendant de part et d'autre du moyeu. Ces anneaux comportent les encoches 86 à bords parallèles.

Le carter 80 comporte un alésage 90 coaxial au support annulaire 78 et dans lequel le moyeu 88 du support annulaire 78 est reçu libre à rotation autour de son axe principal B. Les anneaux du support 78 s'étendent de part et d'autre du carter 80. Le moyeu 88 présente centralement un trou (non référencé) de forme non circulaire, ici de forme rectangulaire, pour sa liaison en rotation par coopération de formes avec l'extrémité d'un arbre (non représenté) destiné à être entraîner en rotation par exemple par une manivelle ou un moteur, par exemple un moteur électrique.

Le carter 80 comporte une face horizontale inférieure 80i qui est apte à venir en appui sur la face supérieure horizontale 52 du support linéaire 48.

L'alésage 90 du carter 80 est débouchant verticalement vers le bas dans la face inférieure 80i du carter 80, pour permettre le transfert de conducteurs 33 vers le support annulaire 78.

Lors de la mise en oeuvre de la première étape de transfert, le support linéaire 48 est reçu transversalement entre les guides latéraux 82 et il est reçu verticalement entre la face inférieure 80i du carter 80 et une face supérieure horizontale 84s du socle inférieur 84.

Ainsi, le support linéaire 48 est guidé longitudinalement sans jeu au cours de la première étape de transfert.

Chaque guide latéral 82 comporte en outre une face supérieure 92 en forme de rampe, dont l'inclinaison est déterminée de manière que chaque face supérieure 92 est apte à s'appuyer dessous les brins longitudinaux 74a, 74b des fils 38a, 38b, de manière à entraîner progressivement les fils 38a, 38b vers le haut, pour leur transfert vers le support annulaire 78.

Selon le mode de réalisation représenté aux figures 13 et 15, la face supérieure 92 de chaque guide latéral 82 est plane et est inclinée par rapport à un plan horizontal.

Cependant, il sera compris que l'invention n'est pas limitée à ce mode de réalisation, et que la forme de la face supérieure 92 de chaque guide peut être différente, par exemple, la face supérieure 92 peut être convexe bombée vers le haut, concave ouverte vers le haut, ou bien elle peut former deux plans inclinés selon des angles différents.

Enfin, chaque guide latéral 82 peut aussi être réalisé en plusieurs parties, et/ou il peut être mobile verticalement de manière à pousser les brins longitudinaux 74a, 74b des fils 38a, 38b vers le haut.

La première étape de transfert consiste à entraîner en rotation le moyeu 88, par exemple de manière précité à l'aide d'une manivelle ou d'un moteur, et à faire rouler le support annulaire 78 sur la face supérieure 52 du support linéaire 48 de manière que les encoches 86 du support annulaire 78 viennent successivement en vis-à-vis avec les encoches 54 du support linéaire 48 et sans glissement du support annulaire 78 par rapport au support linéaire 48.

Pour cela, lors de la mise en oeuvre de la première étape de transfert, la face cylindrique externe 78e du support annulaire 78 est en appui verticalement vers le bas contre la face supérieure 52 du support linéaire 48 avec présence d'un faible jeu (figure 15).

Lors du roulage du support annulaire 78, et comme on peut le voir à la figure 15, sur le support linéaire 48, le carter 80, les guide latéraux 82 et le socle inférieur 84 se translatent longitudinalement par rapport au support linéaire 48 en suivant le déplacement longitudinal du support annulaire 78 par rapport au support linéaire 48.

Lors de la première phase de transfert, la face supérieure 92 de chaque guide latéral 82 s'appuie vers le haut contre les tronçons longitudinaux 70 des conducteurs 33 qui sont situés au niveau du fond inférieur de chaque encoche 54 du support linéaire 48.

Ainsi, les tronçons transversaux 68, qui sont reçus dans une même encoche 54 du support linéaire 48, sont transférés simultanément depuis l'encoche 54 associée du support linéaire 48 vers une encoche 86 du support annulaire 78 de sorte que la première couche 64 et la deuxième couche 66 de conducteurs 33 soient transférées simultanément depuis le support linéaire 48 vers le support annulaire 78.

Comme on l'a dit plus haut, le support annulaire 78 comporte un nombre d'encoches 86 qui est égal au nombre d'encoches 20 du corps 10 de stator 11 et le support linéaire 48 comporte un nombre d'encoches 54 qui est supérieur au nombre d'encoches 20 du corps 10.

Par conséquent, lors de la première étape de transfert, le support annulaire 78 effectue plusieurs tours autour de son axe principal B lors de son roulage sur la face supérieure 52 du support linéaire 48, et les deux couches 64, 66 de conducteurs 33 s'enroulent autour du support annulaire 78, en formant deux spirales coaxiales, dont chaque spire de l'une des deux spirales correspond à un tour du support annulaire 78 autour de son axe B.

Selon un premier mode de réalisation représenté aux figures 5 et 6, chaque couche 64, 66 de conducteurs 33 est réalisée de manière qu'elle permette de former un même nombre de spires 32 pour chaque enroulement de phase 30, ici, quatre spires 32 pour chaque couche 64, 66, chaque spire 32 correspondant à un tour du corps 10 pour un même enroulement 30.

Ainsi, comme on l'a représenté schématiquement à la figure 6, chaque couche 64, 66 est constituée d'une succession longitudinale de quatre parties 64a, 66a permettant de former chacune une spire 32, et chaque partie 64a, 66a est formée par les tronçons transversaux 68 et longitudinaux 70 des conducteurs 33 qui sont associés à un nombre d'encoches 54 du support linéaire 48 égal au nombre d'encoches 20 du corps 10, c'est-à-dire ici, soixante douze encoches 54.

Selon le mode de réalisation représenté aux figures 7 et 8, chaque couche 64, 66 de conducteurs 33 est réalisée de manière qu'elle permette de former un nombre différent de spires 32 pour chaque enroulement de phase 30, ici, la première couche 64 permet de former quatre spires 32 et la deuxième couche 66 permet de former trois spires 32.

Par conséquent, d'une manière similaire au mode de réalisation décrit précédemment, en référence aux figures 5 et 6, la première couche 64 est constituée d'une succession longitudinale de quatre parties 64a. Par contre, la deuxième couche 66 est constituée d'une succession longitudinale de seulement trois parties 66a.

Pour chaque tour effectué par le support annulaire 78, chaque encoche 86 du support annulaire 78 reçoit le ou les tronçons transversaux 68 qui sont agencés dans une encoche 54 associée du support linéaire 48. Ainsi, au fur et à mesure de la réalisation de la première étape de transfert, les tronçons transversaux 68 se superposent radialement dans chaque encoche 86 du support annulaire 78.

Par conséquent, à l'issue de la première étape de transfert, chaque encoche 86 du support annulaire 78 reçoit un nombre de tronçons transversaux 68 égal au nombre de spires 32 formées, c'est-à-dire huit tronçons transversaux 68 selon le mode de réalisation représenté aux figures 5 et 6, ou bien sept tronçons transversaux selon le mode de réalisation représenté aux figures 7 et 8.

D'une manière générale la longueur du support 48 est déterminée par le nombre N10 d'encoches 54 nécessaire.

Ce nombre d'encoches 54 dépend du nombre N1 d'encoches 20 du corps 10 du stator 11, du nombre p de paire de pôles, du nombre de tours Nt du bobinage à réaliser et du nombre q d'arrivée de deux fils.

On a les relations suivantes :
N1= 2xpxq
N10= Ntxqxp+q si Nt est impair
N10= (Nt+1)xqxp+q si Nt est impair.

Chaque encoche 20 de stator 11 contient Nf fils élémentaires. On a alors Nf = 2 Nt

Dans les exemples de réalisations des figures 5 à 8, le stator 11 est destiné à être associé à un rotor à griffes comportant 12 pôles

Dans ces figures q est égal à 6 et p est égale à 6.

Pour 7 tours (Figures 7 et 8) ou 8 tours (Figure 5 et 6) on a alors N1 =72, N10 = 294 et Nf= 14 ou 16 fils par encoche 20.

Le mouvement du support 48 est asservi en position et en vitesse suivant les trois axes V, L, T.

Grâce à ces dispositions on obtient ultérieurement un fort taux de remplissage des encoches 20.

Conformément à un autre aspect de l'invention, et comme on peut le voir à la figure 12, la première étape de transfert consiste à faire rouler le support annulaire 78 sur la face supérieure 52 du support linéaire 48 de l'aval vers l'amont, de manière à transférer progressivement les tronçons transversaux 68 des conducteurs 33 vers le support annulaire 78 depuis les tronçons transversaux 68, qui sont reçus dans l'encoche 54 du support linéaire 48, qui est située à l'extrémité longitudinale aval 48b du support linéaire 48, jusqu'aux tronçons transversaux 68 qui sont reçus dans l'encoche 54 du support linéaire 48, qui est située à l'extrémité longitudinale amont 48a du support linéaire 48.

Ainsi, les brins d'extrémité 71 de chaque conducteur 33 sont agencés au niveau des spires radialement externe des spirales ainsi formées.

De plus, lors de la première étape de transfert, les couches 64, 66 de conducteurs 33 sont enroulées l'une sur l'autre de manière que chaque spire 32 formée à partir d'une partie 64a, 66a d'une couche 64, 66 de conducteurs est située radialement entre deux spires 32 formées à partir de deux portions de l'autre couche 66, 64 de conducteurs.

Comme on l'a décrit précédemment, et selon un autre aspect de l'invention représenté aux figures 9 et 10, chaque conducteur 33 comporte deux fils 38a, 38b.

Par conséquent, la première étape de transfert consiste à transférer les deux fils 38a, 38b de chaque conducteur tel que décrit précédemment.

Lors de la première étape de transfert, les brins transversaux 72a, 72b des deux fils 38a, 38b qui sont reçus dans chaque encoche 54 du support linéaire 48, sont touts transférés dans même une encoche 86 associée en vis-à-vis du support annulaire 78.

De plus, puisque le support annulaire 78 effectue plusieurs tours autour de son axe B lors de la première étape de transfert, chacune des encoches 86 reçoit successivement les brins transversaux 72a, 72b qui étaient reçus dans plusieurs encoches 54 du support linéaire 48 associées au même conducteur 33.

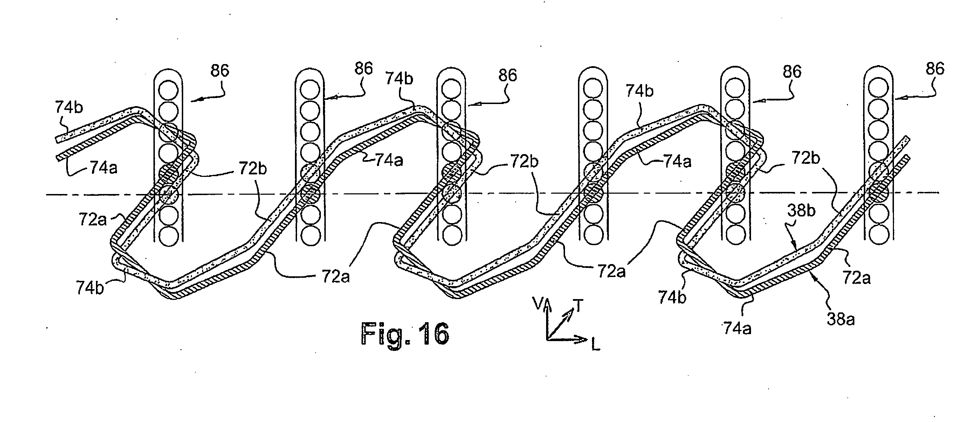

Ainsi, comme on peut le voir par exemple à la figure 16, lorsque le support annulaire 78 effectue deux tours autour de son axe B pendant la première étape de transfert, chaque encoche 86 reçoit huit brins transversaux 72a, 72b.

De plus, la largeur de chaque encoche 86 du support annulaire 78 est ici aussi globalement égale à la largeur de chacun des deux fils 38a, 38b.

Par conséquent, les brins transversaux 72a, 72b des fils 38a, 38b sont superposés radialement dans les encoches 86 du support annulaire 78 et selon la même configuration que dans les encoches 54 du support linéaire 48.

Ainsi, les brins transversaux 72a, 72b appartenant à une même spire 32 sont superposés radialement dans chaque encoche 86 du support annulaire 78 de manière alternative, et les brins longitudinaux 74a, 74b des deux fils 38a, 38b qui relient les brins transversaux 72a, 72b qui sont reçus dans deux encoches 86 consécutives associées et appartenant à une même spire 32.

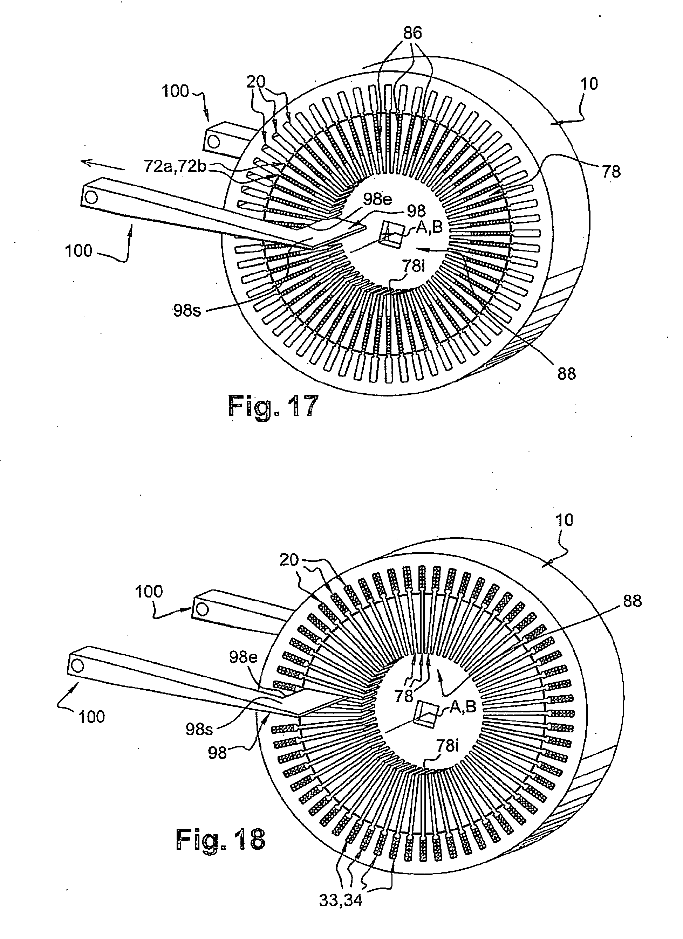

On a représenté aux figures 17 et 18, une installation pour la mise en oeuvre de la deuxième étape de transfert des conducteurs 33 depuis le support annulaire 78 vers le corps 10 du stator 11.

Cette installation comporte des moyens de positionnement du support annulaire 78 dans le corps 10, de manière que le support annulaire 78 soit reçu coaxialement au corps 10, dans le logement circulaire délimité par la face cylindrique interne 12 du corps. Enfin, le diamètre de la face cylindrique extérieure 78e du support annulaire 78 est globalement égal au diamètre de la face cylindrique interne 12 du corps 10.

L'installation comporte aussi des moyens d'indexation du support annulaire 78 autour de son axe principal B, de manière que chaque encoche 86 du support annulaire 78 soit en vis-à-vis d'une encoche 20 du corps 10 et débouche radialement dans la rainure axiale 26 de l'encoche 20 associée.

L'installation comporte enfin des lames d'insertion radiale 98 dont chacune s'étend dans un plan radial par rapport à l'axe principale B du support annulaire 78 et du corps 10.

L'installation comporte une paire de lames d'insertion 98 qui est associée à chaque encoche 86 du support annulaire 78, et les lames d'insertion 98 d'une même paire sont réparties axialement de part et d'autre du moyeu central 88 du support annulaire 78.

Ici, le support annulaire 78 comporte soixante-douze encoches 86, l'installation comporte par conséquent, soixante-douze paires de lames d'insertion 98 soit un total de cent quarante-quatre lames d'insertion 98.

Par souci de clarté, on a représenté aux figures 17 et 18 une seule paire de lames d'insertion 98.

Les paires de lames 98 étant identiques et réparties angulairement autour de l'axe principal B du support annulaire 78, la description des lames 98 qui va suivre s'applique à l'identique aux autres lames d'insertion 98.

Les deux lames d'insertion 98 d'une même paire sont associées à une seule encoche 86 du support annulaire 78.

Elles s'étendent dans le plan radial médian de l'encoche 86 associée, et l'épaisseur de chaque lame 98 est inférieure à la plus petite largueur de l'encoche 86 associée.

Comme on l'a dit plus haut, les deux lames 98 d'une même paire sont agencées axialement de part et d'autre du moyeu central 88 du support annulaire 78.

Plus précisément, comme on peut le voir à la figure 17, au début de la deuxième étape de transfert, chaque lame 98 est située radialement de manière que le bord d'extrémité radiale externe 98e de chaque lame 98 soit situé radialement au niveau de la face cylindrique interne 78i du support annulaire 78.

L'extrémité axiale externe 98s de chaque lame 98, c'est-à-dire celle qui est située axialement à distance du moyeu central 88, fait saillie axialement par rapport à la face radiale 78a associée du support annulaire 78, et elle porte une tige 100 d'entraînement de la lame 98, qui s'étend radialement vers l'extérieur par rapport à l'axe principal B du support annulaire 78.

Lors de la mise en oeuvre de la deuxième étape de transfert, les lames d'insertion 98 d'une même paire sont entraînées radialement par rapport à l'axe principal B du support annulaire 78, de manière que chaque lame 98 se déplace radialement dans l'encoche 86 associée du support annulaire vers l'extérieur du support annulaire 78, en entraînant simultanément les tronçons transversaux 68 du conducteur 33, qui sont reçus dans cette encoche 86, de manière que ces tronçons transversaux 68 migrent dans l'encoche 20 associée du corps 10, formant alors les brins axiaux 34 des enroulements de phase 30.

Selon un mode de réalisation préféré de la deuxième étape de transfert, les lames d'insertion 98 sont toutes entraînées simultanément dans leur mouvement radial par rapport à l'axe principal B du support annulaire 78, ce qui permet d'avoir une durée limitée de cette deuxième étape de transfert.

A l'issue de la phase d'entraînement, et comme on peut le voir plus en détails à la figure 18, chaque lame 98 est située radialement par rapport à l'axe principal B du support annulaire 78 de manière que son bord d'extrémité radiale externe 98e est situé globalement au niveau de la face cylindrique externe 78e du support annulaire 78.

A l'issue de la deuxième étape de transfert, les tronçons transversaux 68, qui étaient reçus dans les encoches 86 du support annulaire 78, forment les brins axiaux 34 des conducteurs 33, et les tronçons longitudinaux 70 forment les brins de liaison 36 des conducteurs 33.

La première étape de transfert est mise en oeuvre par roulage du support annulaire 78 sur le support linéaire 48, chaque tronçon longitudinal 70 est alors déformé par cintrage lors de cette première étape de transfert, de manière que le brin de liaison 36 formé à partir de chaque tronçon longitudinal 70 s'étend globalement sur un arc de cercle qui est centré sur l'axe principal A du corps 10 de stator 11, et qui est délimité angulairement par les encoches 20 du corps 10 qui reçoivent les brins axiaux 34 reliés entre eux par ce brin de liaison 36.

Par ailleurs, puisque chaque encoche 20 du corps 10 de stator 11 s'étend radialement par rapport à l'axe principal A du corps 10, la longueur d'un arc de cercle délimité par deux encoches 20 du corps 10 est proportionnelle au rayon dudit arc de cercle.

Selon un premier mode de réalisation de l'invention, tous les brins de liaison 36 sont de longueur identique et supérieure à la longueur de l'arc de cercle sur lequel s'étend chaque brin de liaison 36. Par conséquent, deux brins de liaison 36 faisant partie de deux spires 32 décalées radialement, sont de hauteur axiale différente, la hauteur axiale du brin de liaison 36 faisant partie de la spire 32 radialement interne étant supérieure à la hauteur axiale du brin de liaison 36 faisant partie de la spire 32 radialement externe.

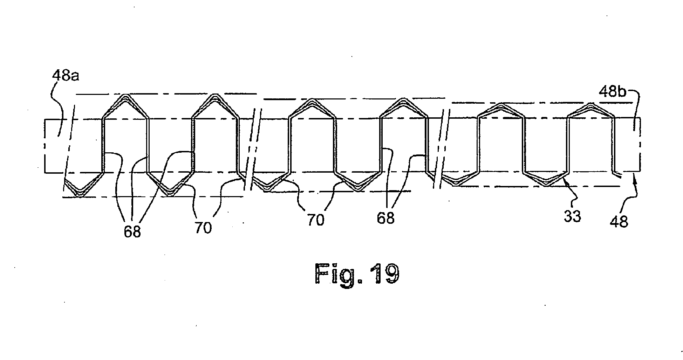

Conformément à encore un autre aspect de l'invention, et comme on l'a représenté schématiquement à la figure 19, pour que tous les brins de liaison 36 du stator 11 aient une même hauteur axiale, le mouvement des têtes de dépose 56 lors des phases de dépose est déterminé de manière que la longueur des tronçons longitudinaux 70, qui sont situés à proximité de l'extrémité aval 48b du support linéaire 48, est inférieure à la longueur des brins longitudinaux, qui sont situés au niveau de l'extrémité amont 48a du support linéaire 48.

Selon un mode de réalisation préféré de cet aspect de l'invention, le mouvement des têtes de dépose 46 lors des phases de dépose est déterminé de manière que les tronçons longitudinaux 70 qui, à l'issue de la deuxième étape de transfert, qui forment des brins de liaison 38 situés à une même cote radiale par rapport à l'axe A du corps 10, soient de même longueur.

Enfin, selon l'autre aspect de l'invention selon lequel chaque conducteur 33 comporte deux fils 38a, 38b, tous les brins transversaux 72a, 72b qui sont reçus dans chaque encoche 86 du support annulaire 78 sont transférés dans une encoche associée du corps 10.

Selon un mode de réalisation préféré du stator, que l'on a représenté à la figure 1, la largeur de chaque encoche 20 du corps 10 est globalement égale au double de la largueur de chaque fil 38a, 38b.

Bien entendu la largeur des rainures 26 des encoches 20 au niveau de la face 12 du corps 10 est égale à la dimension des fils 38a, 38 b, au jeu de montage près, pour que les fils 38a, 38b puissent pénétrer dans les encoches comme visible dans les figures 17 et 18.

Ainsi, à l'issue de la deuxième étape de transfert, et pour chaque spire 32 d'un enroulement de phase 30, les deux fils 38a, 38b sont agencés globalement à la même cote radiale l'un par rapport à l'autre.

Lors de leur transfert depuis une encoche 86 du support annulaire 78, dans laquelle ils sont alignés radialement, vers l'encoche 20 associée du corps 10 du stator 11, dans laquelle ils sont agencés à la même cote radiale, les brins 72a, 72b se répartissent tangentiellement par rapport à l'axe principal A du corps 10 du fait de l'élasticité propre des fils 38a, 38b.

En effet, comme on l'a dit plus haut, les brins longitudinaux 74a, 74b des fils 38a, 38b qui forment un même tronçon longitudinal 70 sont de longueur différentes, ainsi, les deux brins transversaux 72a, 72b d'un fil 38a, 38b qui sont reçus dans deux encoches 86 du support annulaire 78 et qui sont reliés entre eux par un brin longitudinal 74a, 74b de longueur la plus faible ont naturellement tendance à se rapprocher l'un de l'autre dans les encoches 20 associés du corps 10, par rapport au deux brins transversaux 72a, 72b qui sont reçus dans les deux mêmes encoches 86 du support annulaire 78 et qui sont reliés par un brin longitudinal de longueur la plus grande qui ont alors naturellement tendance à s'écarter l'un de l'autre.

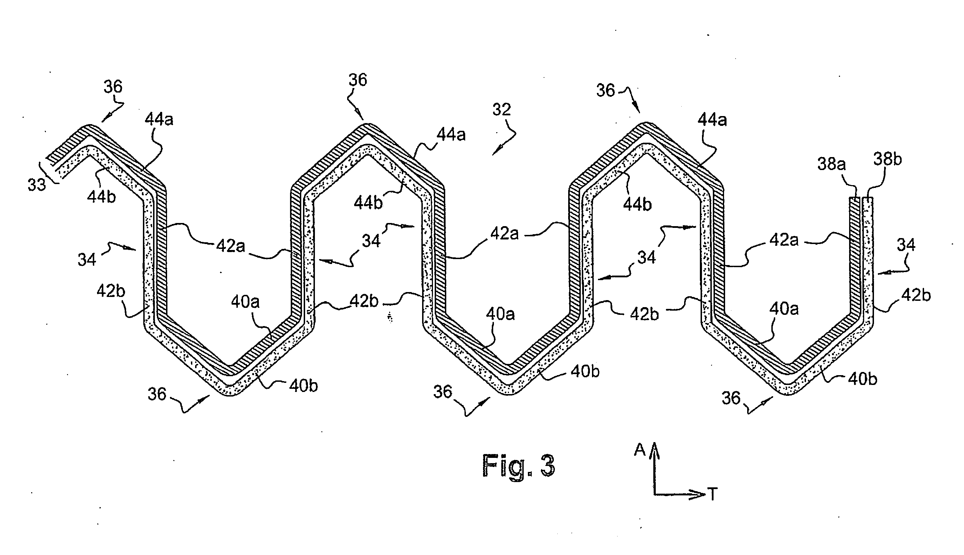

Comme on peut le voir à la figure 3, un premier fil 38a est agencé axialement au dessus du deuxième fil 38b.

Par conséquent, le brin inférieur 40a du premier fil 38a est agencé axialement au dessus du brin inférieur 40b du deuxième fil 38b, et le brin supérieur 44a du premier fil 38a est agencé axialement au dessus du brin supérieur 44b du deuxième fil 38b.

De plus, les brins axiaux 42a, 42b sont répartis dans les encoches de manière que deux brins axiaux 42a du premier fil 38a qui sont reçus dans deux encoches 20 associées consécutives du même enroulement et qui sont reliés entre eux par le brin supérieur 44a du premier fil 38a, sont agencés de part et d'autre des brins axiaux 42b du deuxième fil 38b qui sont reçus dans les deux mêmes encoches 20 associées consécutives et qui sont reliés entre eux par le brin supérieur 44b du deuxième fil 38b.

Aussi, deux brins axiaux 42a du premier fil 38a qui sont reçus dans deux encoches 20 associées consécutives et qui sont reliés entre eux par le brin inférieur 40a du premier fil 38a, sont agencés entre les brins axiaux 42b du deuxième fil 38b qui sont reçus dans les deux mêmes encoches 20 associées consécutives et qui sont reliés entre eux par le brin inférieur 40b du deuxième fil 38b.

Ainsi qu'il ressort de la description et des dessins la largeur des encoches 54 du support 48 est égale au diamètre des fils 38a, 38b isolés du conducteur 33 augmentée d'un jeu de montage.

Le pas linéaire des rainures 54 correspond globalement au pas circonférentiel des encoches 20 du corps 10.

La profondeur des encoches 54 est calculée pour recevoir deux paires de fils 38a, 38b alignés radialement, comme visible à la figure 10, augmenté d'un jeu. Ce jeu est avantageusement supérieur à un jeu de montage. Le jeu est ici supérieur à 1 mm.

La largeur du support 48, c'est-à-dire la distance entre ces faces 50a, 50b, correspond à la distance entre les faces 16, 18 du corps 10 augmentée d'un jeu. Ce jeu est avantageusement supérieur à 0, 5 mm et inférieur au jeu précité concernant la profondeur des encoches 54.

Il en est de même en ce qui concerne le support annulaire 78. Ainsi la largeur du support 78 entre ses faces radiales 78a est égale à la largeur du support 48, c'est-à-dire à la largeur du corps 10 entre ses faces 16,18, augmentée d'un jeu.

La largeur des encoches 86, ici à bords parallèles, est égale à la largeur des encoches 54.

La profondeur des encoches 86 est calculée pour recevoir plusieurs paires de fils 38a, 38b alignées radialement augmentée d'un jeu, qui peut être voisin de 0. Ici il est prévu huit fils par encoches de manière précitée.

L'outil 48, monobloc à la figure à la figure 4, est en variante en deux parties, les rainures 54 étant centralement fendues. Ainsi les fentes longitudinales permettent de faire passer un outil d'aide à l'extraction des fils 38a, 38b.

Cet outil d'aide à l'extraction peut être alors un troisième guide à rampe, du type de celui des guides 82, disposé entre les deux guides 82.

Bien entendu la présente invention n'est pas limitée aux exemples de réalisations décrits. Ainsi les fils 38a, 38b, de section circulaire dans les dessins, peuvent avoir une autre section, par exemple une section en forme de méplat ou une section hexagonale.

On appréciera que l'on obtient un bon taux de remplissage des encoches 20 avec un bon rangement des fils et que les deux fils 38a, 38b du conducteur 33 soient globalement parallèles sur toute la longueur de l'enroulement. Les spires des différentes paires de fil se succèdent radialement.

On obtient de bon passage d'air au niveau des tronçons 36 situés de part et d'autre du corps 50.

Cela permet une bon refroidissement du corps 10 du stator notamment lorsque celui -ci appartient à un alternateur ou à un alterno-démarreur compact à ventilation interne comportant au moins un ventilateur solidaire du rotor et un carter ajouré comme décrit dans le document WO-A-01/69762 précité.

A la lumière des figures 5 à 8 ont appréciera que les entrées et les sorties des enroulements sont proches.

Dans ces figures c'est au niveau de l'extrémité 48b que se fait l'inversion du sens du bobinage des enroulements, tandis que les entrées et les sorties, constituées par les brins 71, des enroulements sont plus proches de l'extrémité 48a; 6 encoches supplémentaires 54 étant prévues en dessous des entrées pour les sorties 71 dans le mode de réalisation de la figure 5.

Ainsi dans le cas d'un bobinage ondulé à 8 tours (8 parties 64a, 64b), le premier tronçon 33a est déposé dans les encoches 1 à 288 et le deuxième tronçon 33b en sens opposé dans les encoches 282 à 294.

Dans le mode de réalisation de la figure 7 on fait comme dans le mode de réalisation de la figure 5 pour les 6 premières parties 64a, 66a. La dernière partie 66b est dans ce cas constituée par les rainures 72 à 67.

Dans les deux cas à la fin de la dernière partie 66a de la première couche 64 on bobine le début de la deuxième couche 66 dans les encoches 282 à 277.

Les dernières parties 66b sont donc occupées par deux conducteurs 33 à deux fils 38a, 338b.

Ainsi qu'on le sait les enroulements 30 sont couplés en étoile et/ou en triangle dans un alternateur ou un alterno-démarreur du type de celui décrit dans le document WO-A-01/69762.

Les enroulements 30 peuvent être montés, de manière précitée en lieu et place d'un bobinage à segments conducteurs. On peut donc équiper l'alternateur décrit dans le document EP 0 881 752 d'un stator selon l'invention équipé d'un corps comportant 96 encoches ; les enroulements étant couplés à un pont redresseur et/ou de commande par exemple comme dans les modes de réalisation des figures 8 et 17 de ce document.

## Revendications

1. Procédé de réalisation d'un stator (11) de machine électrique tournante comportant un corps (10) annulaire dans la face cylindrique interne (12) duquel sont réalisées des encoches axiales (20) et comportant une pluralité d'enroulements (30) de phase constitués de conducteurs (33) agencés dans des encoches (20) associées du corps (10),
du type qui comporte
- une étape de dépose des conducteurs (33) sur un support linéaire (48) d'orientation principale longitudinale dont la face supérieure horizontale (52) comporte des encoches transversales (54) réparties longitudinalement, comportant une première phase de dépose des conducteurs (33) dans les encoches (54), de manière à former une première couche (64) de conducteurs (33), et une deuxième phase de dépose des conducteurs (33) dans les encoches (54), de manière à former une deuxième couche (66) de conducteurs (33) qui est agencée verticalement au dessus de la première couche (64),
- une première étape de transfert des conducteurs (33), depuis le support linéaire (48), sur un support annulaire (78) d'axe principal transversal dont la face cylindrique externe (78e) comporte des encoches transversales (86) réparties angulairement autour de l'axe transversal principal (A) du support annulaire (78), de manière que les deux couches (64, 66) de conducteurs forment deux spirales coaxiales sur le support annulaire (78), et
- une deuxième étape de transfert des conducteurs (33) depuis le support annulaire (78) sur le corps (10) du stator (11),
- dans lequel pour chaque enroulement (30), la première phase de dépose et la deuxième phase de dépose consistent à déposer un même conducteur (33) sur le support linéaire (48), de manière qu'un premier tronçon (33a) dudit conducteur (33) forme en partie la première couche (64) de conducteurs (33) et un deuxième tronçon (33b) dudit conducteur (33) forme en partie la deuxième couche (66) de conducteurs (33).

2. Procédé selon la revendication 1, caractérisé en ce que-la première phase de dépose et la deuxième phase de dépose consistent chacune, pour chaque conducteur (33), à remplir successivement les encoches (54) du support linéaire (48) qui sont associées au conducteur (33), en introduisant un brin transversal (68) globalement rectiligne du conducteur (33) dans une encoche (54) associée, en pliant et/ou cintrant le conducteur (33) pour former un tronçon longitudinal latéral (70), dit brin longitudinal, qui est situé transversalement en vis-à-vis d'une face longitudinale verticale latérale (50a, 50b) du support linéaire, et en introduisant un brin transversal (68) consécutif dans une encoche (54) associée consécutive, de manière que le conducteur (33) forme des ondulations longitudinales comportant une succession de brins transversaux (68) qui sont reçus dans les encoches associées (54) et de brins longitudinaux (70) qui sont agencés alternativement de part et d'autre du support linéaire (48).

3. Procédé selon la revendication 1 ou 2, **caractérisé en ce que** pour chaque conducteur (33), la première phase de dépose consiste à remplir successivement les encoches (54) associées de l'amont vers l'aval et la deuxième phase de dépose consiste à remplir successivement les encoches (54) associées de l'aval vers l'amont.

4. Procédé selon la revendication 3, **caractérisé en ce que** la deuxième phase de dépose est mise en oeuvre continûment après la première phase de dépose, de manière que les deux tronçons (33a, 33b) du conducteur (33) soient reliés entre eux au niveau d'une extrémité aval (48b) du support linéaire (48).

5. Procédé selon la revendication précédente, **caractérisé en ce que** lors de l'étape de dépose, tous les conducteurs (33) associés aux enroulements (30) sont déposés simultanément sur le support longitudinal (48), de manière qu'à l'issue de l'étape de bobinage, les premiers tronçons (33a) des conducteurs, qui forment la première couche (64) de conducteurs (33) sont globalement parallèles, et les deuxièmes tronçons (33b) des conducteurs (33), qui forment la deuxième couche (66) de conducteurs (33) sont globalement parallèles.

6. Procédé selon l'une quelconque des revendications précédentes, du type dans lequel la première étape de transfert consiste à transférer successivement les brins transversaux (68) qui sont reçus dans les encoches (54) du support linéaire (48) vers les encoches (86) du support annulaire (78), par roulage du support annulaire (78) sur le support linéaire (48),
**caractérisé en ce que** la première étape de transfert consiste à transférer progressivement les brins transversaux (68) des conducteurs (33) depuis une encoche (54) d'extrémité aval du support linéaire (48) jusqu'à une encoche d'extrémité (54) amont du support linéaire (48).

7. Procédé selon l'une quelconque des revendications précédentes, **caractérisé en ce que** pour chaque conducteur (33), l'étape de dépose consiste à déposer simultanément deux fils (38a, 38b) conducteurs électriquement sur le support linéaire (48) qui forment ledit conducteur (33).

8. Agencement d'un ensemble de conducteurs (33) sur un support linéaire (48) obtenu à l'issue de l'étape de dépose d'un procédé selon l'une quelconque des revendications précédentes, les conducteurs (33) étant aptes à être transférés dans une première étape depuis le support linéaire (48) sur un support annulaire (78) et dans une deuxième étape depuis le support annulaire (78) sur un corps (10) annulaire d'un stator (11) distincte du support annulaire (48) de manière à former une pluralité d'enroulements (30),
dans lequel la face supérieure horizontale (52) du support linéaire (48) comporte une série d'encoches transversales (54) alignées longitudinalement, chaque encoche (54) recevant au moins un brin (68) de chaque conducteur (33) associé à un seul enroulement (30) du stator (11),
dans lequel chaque conducteur (33) comporte une succession de brins transversaux (68) agencés dans des encoches (54) du support linéaire (48) associées, et de tronçons longitudinaux latéraux (70), dits brins longitudinaux, qui sont agencés de part et d'autre du support linéaire (48),
**caractérisé en ce que** chaque enroulement (30) est formé par un seul conducteur (33) dont un premier tronçon (33a) forme en partie une première couche (64) inférieure, et un deuxième tronçon (33) forme en partie la deuxième couche (66).

9. Agencement selon la revendication précédente, **caractérisé en ce que** les deux extrémités de chaque conducteur (33) sont agencées à proximité d'une extrémité amont (48a) du support linéaire (48).

10. Agencement selon la revendication 8 ou 9, **caractérisé en ce que** pour deux encoches (54) consécutives associées à un conducteur (33), recevant chacune un brin transversal (68) du premier tronçon (33a) et un brin transversal (68) du deuxième tronçon (33b) dudit conducteur (33),
les deux brins transversaux (68) du premier tronçon (33a), qui sont reçus dans ces deux encoches (54), sont reliés entre eux par un brin longitudinal (70) inférieur qui est agencé transversalement d'un premier coté du support linéaire (48), et les deux brins transversaux (68) du deuxième tronçon (33b), qui sont reçus dans ces deux encoches (54) sont reliés entre eux par un brin longitudinal supérieur (70) qui est agencé transversalement de l'autre coté du support linéaire (48), par rapport au dit brin longitudinal inférieur (70).

11. Agencement selon l'une quelconque des revendications 8 à 10, **caractérisé en ce que** la longueur des brins longitudinaux (70) situés à proximité de l'extrémité aval (48b) du support linéaire (48) est inférieure à la longueur des brins longitudinaux (70) situés à proximité de l'extrémité amont (48a) du support linéaire (48).

12. Agencement selon l'une quelconque des revendications 8 à 11, **caractérisé en ce que** dans la première couche (64) de conducteurs, et dans deux encoches adjacentes (54) du support linéaire (48) qui reçoivent chacune un brin transversal (68) du conducteur (33) associé, le brin longitudinal (70) qui prolonge vers l'aval le brin transversal (68) qui est reçu dans l'encoche (54) amont des dites deux encoches adjacentes (54), chevauche le brin longitudinal (70) qui prolonge vers l'aval le brin transversal (68) qui est reçu dans l'encoche aval (54) des dites deux encoches (54) adjacentes.

13. Agencement selon l'une quelconque des revendications 8 à 12, **caractérisé en ce que** dans la deuxième couche (66) de conducteurs (33), et dans deux encoches (54) adjacentes du support linéaire (48) qui reçoivent chacune un brin transversal (68) du conducteur associé (33), le brin longitudinal (70) qui prolonge vers l'amont le brin transversal (68) qui est reçu dans l'encoche aval (54) des dites deux encoches (54) adjacentes, chevauche le brin longitudinal (70) qui prolonge vers l'amont le brin transversal (68) qui est reçu dans l'encoche amont (54) des dites deux encoches (54) adjacentes.

14. Agencement selon l'une quelconque des revendications 8 à 13, **caractérisé en ce que** chaque conducteur (33) comporte une paire de fils conducteurs (38a, 38b) électriquement qui sont adjacents.

15. Agencement selon la revendication précédente, **caractérisé en ce que** pour chaque conducteur (33), les deux fils (38a, 38b) forment des ondulations axiales complémentaires qui sont imbriquées transversalement, de manière que l'un des deux fils (38a) soit situé transversalement dessus l'autre (38b).

## Claims

1. Method for producing a stator (11) of a rotating electrical machine comprising an annular body (10) in the internal cylindrical face (12) on which are formed axial notches (20) and comprising a plurality of phase windings (30) consisting of conductors (33) arranged in associated notches (20) of the body (10),
of the type which comprises
- a step for laying conductors (33) on a linear support (48) of longitudinal main orientation whose horizontal top face (52) comprises longitudinally distributed transversal notches (54), comprising a first phase for laying the conductors (33) in the notches (54), so as to form a first layer (64) of conductors (33), and a second phase of laying the conductors (33) in the notches (54), so as to form a second layer (66) of conductors (33) which is arranged vertically above the first layer (64),
- a first step for transferring the conductors (33), from the linear support (48), to an annular support (78) of transversal main axis whose external cylindrical face (78e) comprises transversal notches (86) distributed angularly about the main transversal axis (A) of the annular support (78), so that the two layers (64, 66) of conductors form two coaxial spirals on the annular support (78), and
- a second step for transferring the conductors (33) from the annular support (78) to the body (10) of the stator (11),
- in which, for each winding (30), the first laying phase and the second laying phase consist in laying one and the same conductor (33) on the linear support (48), so that a first section (33a) of said conductor (33) partly forms the first layer (64) of conductors (33) and a second section (33b) of said conductor (33) partly forms the second layer (66) of conductors (33).

2. Method according to Claim 1, **characterized in that** the first laying phase and the second laying phase each consist, for each conductor (33), in successively filling the notches (54) of the linear support (48) which are associated with the conductor (33), by introducing a substantially rectilinear transversal strand (68) of the conductor (33) into an associated notch (54), by folding and/or bending the conductor (33) to form a lateral longitudinal section (70), called longitudinal strand, which is situated transversally facing a lateral vertical longitudinal face (50a, 50b) of the linear support, and by introducing a consecutive transversal strand (68) into a consecutive associated notch (54), so that the conductor (33) forms longitudinal ripples comprising a succession of transversal strands (68) which are received in the associated notches (54) and of longitudinal strands (70) which are arranged alternately on either side of the linear support (48).

3. Method according to Claim 1 or 2, **characterized in that**, for each conductor (33), the first laying phase consists in successively filling the associated notches (54) from upstream to downstream and the second laying phase consists in successively filling the associated notches (54) from downstream to upstream.

4. Method according to Claim 3, **characterized in that** the second laying phase is implemented continuously after the first laying phase, so that the two sections (33a, 33b) of the conductor (33) are linked together at the level of a downstream end (48b) of the linear support (48).

5. Method according to the preceding claim, **characterized in that**, during the laying step, all the conductors (33) associated with the windings (30) are laid simultaneously on the longitudinal support (48), so that, on completion of the winding step, the first sections (33a) of the conductors, which form the first layer (64) of conductors (33) are substantially parallel, and the second sections (33b) of the conductors (33), which form the second layer (66) of conductors (33), are substantially parallel.

6. Method according to any one of the preceding claims, of the type in which the first transfer step consists in successively transferring the transversal strands (68) which are received in the notches (54) of the linear support (48) to the notches (86) of the annular support (78), by rolling the annular support (78) over the linear support (48),
**characterized in that** the first transfer step consists in progressively transferring the transversal strands (68) of the conductors (33) from a downstream end notch (54) of the linear support (48) to an upstream end notch (54) of the linear support (48).

7. Method according to any one of the preceding claims, **characterized in that**, for each conductor (33), the laying step consists in simultaneously laying two electrically conductive wires (38a, 38b) on the linear support (48) which form said conductor (33).

8. Arrangement of a set of conductors (33) on a linear support (48) obtained on completion of the laying step of a method according to any one of the preceding claims, the conductors (33) being able to be transferred in a first step from the linear support (48) to an annular support (78) and a second step from the annular support (78) to an annular body (10) of a stator (11) separate from the annular support (78) so as to form a plurality of windings (30),
in which the horizontal top face (52) of the linear support (48) comprises a series of longitudinally aligned transversal notches (54), each notch (54) receiving at least one strand (68) of each conductor (33) associated with a single winding (30) of the stator (11),
in which each conductor (33) comprises a succession of transversal strands (68) arranged in associated notches (54) of the linear support (48), and of lateral longitudinal sections (70), called longitudinal strands, which are arranged on either side of the linear support (48),
**characterized in that** each winding (30) is formed by a single conductor (33) of which a first section (33a) partly forms a first bottom layer (64), and a second section (33b) partly forms the second layer (66).

9. Arrangement according to the preceding claim, **characterized in that** the two ends of each conductor (33) are arranged in proximity to an upstream end (48a) of the linear support (48).

10. Arrangement according to Claim 8 or 9, **characterized in that**, for two consecutive notches (54) associated with a conductor (33), each receiving a transversal strand (68) of the first section (33a) and a transversal strand (68) of the second section (33b) of said conductor (33),
the two transversal strands (68) of the first section (33a), which are received in these two notches (54), are linked together by a lower longitudinal strand (70) which is arranged transversally on a first side of the linear support (48), and the two transversal strands (68) of the second section (33b), which are received in these two notches (54), are linked together by a upper longitudinal strand (70) which is arranged transversally on either side of the linear support (48), relative to said lower longitudinal strand (70).

11. Arrangement according to any one of Claims 8 to 10, **characterized in that** the length of the longitudinal strands (70) situated in proximity to the downstream end (48b) of the linear support (48) is less than the length of the longitudinal strands (70) situated in proximity to the upstream end (48a) of the linear support (48).

12. Arrangement according to any one of Claims 8 to 11, **characterized in that**, in the first layer (64) of conductors, and in two adjacent notches (54) of the linear support (48) which each receive a transversal strand (68) of the associated conductor (33), the longitudinal strand (70) which extends downstream the transversal strand (68) which is received in the upstream notch (54) of said two adjacent notches (54), overlaps the longitudinal strand (70) which extends downstream the transversal strand (68) which is received in the downstream notch (54) of said two adjacent notches (54).

13. Arrangement according to any one of Claims 8 to 12, **characterized in that**, in the second layer (66) of conductors (33), and in two adjacent notches (54) of the linear support (48) which each receive a transversal strand (68) of the associated conductor (33), the longitudinal strand (70) which extends upstream the transversal strand (68) which is received in the downstream notch (54) of said two adjacent notches (54), overlaps the longitudinal strand (70) which extends upstream the transversal strand (68) which is received in the upstream notch (54) of said two adjacent notches (54).

14. Arrangement according to any one of Claims 8 to 13, **characterized in that** each conductor (33) comprises a pair of electrically conductive wires (38a, 38b) which are adjacent.

15. Arrangement according to the preceding claim, **characterized in that**, for each conductor (33), the two wires (38a, 38b) form complementary axial ripples which are transversally nested, so that one of the two wires (38a) is situated transversally above the other (38b).

## Patentansprüche

1. Verfahren zur Herstellung eines Stators (11) einer drehenden elektrischen Maschine mit einem ringförmigen Körper (10), in dessen zylindrische Innenseite (12) axiale Kerben (20) ausgebildet sind und der mehrere Phasenwicklungen (30) enthält, die aus Leitern (33) bestehen, welche in den zugehörigen Kerben (20) des Körpers (10) angeordnet sind,
jener Art, die Folgendes umfasst:
- einen Schritt des Platzierens der Leiter (33) auf einen linearen Träger (48) mit einer Hauptlängsausrichtung, dessen horizontale Oberseite (52) Querkerben (54) aufweist, die in Längsrichtung verteilt sind, mit einer ersten Phase des Platzierens der Leiter (33) in die Kerben (54), um eine erste Lage (64) von Leitern (33) zu bilden, und einer zweiten Phase des Platzierens der Leiter (33) in die Kerben (54), um eine zweite Lage (66) von Leitern (33) zu bilden, die vertikal auf der ersten Lage (64) angeordnet ist,
- einen ersten Schritt des Übertragens der Leiter (33) von dem linearen Träger (48) auf einen ringförmigen Träger (78) mit einer Querhauptachse, dessen zylindrische Außenseite (78e) Querkerben (86) aufweist, die winkelförmig um die Hauptquerachse (A) des ringförmigen Trägers (78) verteilt sind, so dass die beiden Lagen (64, 66) von Leitern zwei koaxiale Spiralen auf dem ringförmigen Träger (78) bilden, und
- einen zweiten Schritt des Übertragens der Leiter (33) von dem ringförmigen Träger (78) auf den Körper (10) des Stators (11),
- wobei für jede Wicklung (30) die erste Phase des Platzierens und die zweite Phase des Platzierens darin bestehen, einen gleichen Leiter (33) auf den linearen Träger (48) so zu platzieren, dass ein erster Abschnitt (33a) des Leiters (33) teilweise die erste Lage (64) von Leitern (33) bildet und ein zweiter Abschnitt (33b) des Leiters (33) teilweise die zweite Lage (66) von Leitern (33) bildet.

2. Verfahren nach Anspruch 1, **dadurch gekennzeichnet, dass** die erste Phase des Platzierens und die zweite Phase des Platzierens jeweils darin bestehen, für jeden Leiter (33) nacheinander die Kerben (54) des linearen Trägers (48) zu füllen, die dem Leiter (33) zugeordnet sind, indem ein allgemein geradliniger Querstrang (68) des Leiters (33) in eine zugehörige Kerbe (54) eingeführt wird, indem der Leiter (33) gefaltet und/oder gebogen wird, um einen lateralen Längsabschnitt (70), den so genannten Längsstrang, zu bilden, der sich in Querrichtung gegenüber einer lateralen vertikalen Längsseite (50a, 50b) des linearen Trägers befindet, und indem ein nachfolgender Querstrang (68) in eine nachfolgende zugehörige Kerbe (54) eingeführt wird, so dass der Leiter (33) Längswellungen bildet, die eine Folge von Quersträngen (68), die in den zugehörigen Kerben (54) aufgenommen sind, und von Längssträngen (70), die abwechselnd auf beiden Seiten des linearen Trägers (48) angeordnet sind, enthält.

3. Verfahren nach Anspruch 1 oder 2, **dadurch gekennzeichnet, dass** für jeden Leiter (33) die erste Phase des Platzierens darin besteht, die zugehörigen Kerben (54) von stromaufwärts nach stromabwärts zu füllen, und die zweite Phase des Platzierens darin besteht, die zugehörigen Kerben (54) von stromabwärts nach stromaufwärts zu füllen.

4. Verfahren nach Anspruch 3, **dadurch gekennzeichnet, dass** die zweite Phase des Platzierens direkt im Anschluss an die erste Phase des Platzierens durchgeführt wird, so dass die beiden Abschnitte (33a, 33b) des Leiters (33) an einem stromabwärtigen Ende (48b) des linearen Trägers (48) miteinander verbunden werden.

5. Verfahren nach dem vorhergehenden Anspruch, **dadurch gekennzeichnet, dass** bei dem Schritt des Platzierens alle den Wicklungen (30) zugeordneten Leiter (33) gleichzeitig auf den Längsträger (48) platziert werden, so dass nach dem Wickelschritt die erste Abschnitte (33a) der Leiter (33), die die erste Lage (64) von Leitern (33) bilden, allgemein parallel sind, und die zweiten Abschnitte (33b) der Leiter (33), die die zweite Lage (66) von Leitern (33) bilden, allgemein parallel sind.

6. Verfahren nach einem der vorhergehenden Ansprüche, jener Art, bei der der erste Schritt des Übertragens darin besteht, die Querstränge (68), die in den Kerben (54) des linearen Trägers (48) aufgenommen sind, durch Rollen des ringförmigen Trägers (78) auf dem linearen Träger (48) nacheinander zu den Kerben (86) des ringförmigen Trägers (78) zu übertragen,
**dadurch gekennzeichnet, dass** der erste Schritt des Übertragens darin besteht, die Querstränge (68) der Leiter (33) schrittweise von einer Kerbe (54) des stromabwärtigen Endes des linearen Trägers (48) bis zu einer Kerbe (54) des stromaufwärtigen Endes (54) des linearen Trägers (48) zu übertragen.

7. Verfahren nach einem der vorhergehenden Ansprüche, **dadurch gekennzeichnet, dass** für jeden Leiter (33) der Schritt des Platzierens darin besteht, zwei elektrisch leitende Drähte (38a, 38b), die den Leiter (33) bilden, gleichzeitig auf den linearen Träger (48) zu platzieren.

8. Anordnung eines Satzes von Leitern (33) auf einen linearen Träger (48), der nach dem Schritt des Platzierens eines Verfahrens nach einem der vorhergehenden Ansprüche erhalten wird, wobei die Leiter (33) in einem ersten Schritt von dem linearen Träger (48) auf einen ringförmigen Träger (78) übertragen werden können und in einem zweiten Schritt von dem ringförmigen Träger (78) auf einen ringförmigen Körper (10) eines Stators (11), der von dem ringförmigen Träger (78) verschieden ist, übertragen werden können, um mehrere Wicklungen (30) zu bilden,
wobei die horizontale Oberseite (52) des linearen Trägers (48) eine Reihe von in Längsrichtung ausgerichteten Querkerben (54) aufweist, wobei jede Kerbe (54) mindestens einen Strang (68) jedes Leiters (33) aufnimmt, der einer einzigen Wicklung (30) des Stators (11) zugeordnet ist,
wobei jeder Leiter (33) eine Folge von Quersträngen (68), die in den zugehörigen Kerben (54) des linearen Trägers (48) angeordnet sind, und laterale Längsabschnitte (70), so genannte Längsstränge, die auf beiden Seiten des linearen Trägers (48) angeordnet sind, aufweist,
**dadurch gekennzeichnet, dass** jede Wicklung (30) durch einen einzigen Leiter (33) gebildet wird, von dem ein erster Abschnitt (33a) teilweise eine erste untere Lage (64) bildet und von dem ein zweiter Abschnitt (33b) teilweise die zweite Lage (66) bildet.

9. Anordnung nach dem vorhergehenden Anspruch, **dadurch gekennzeichnet, dass** die beiden Enden jedes Leiters (33) in der Nähe eines stromaufwärtigen Endes (48a) des linearen Trägers (48) angeordnet sind.

10. Anordnung nach Anspruch 8 oder 9, **dadurch gekennzeichnet, dass** für zwei aufeinander folgende Kerben (54), die einem Leiter (33) zugeordnet sind und jeweils einen Querstrang (68) des ersten Abschnitts (33a) und einen Querstrang (68) des zweiten Abschnitts (33b) des Leiters (33) aufnehmen,
die beiden Querstränge (68) des ersten Abschnitts (33a), die in diesen beiden Kerben (54) aufgenommen sind, durch einen unteren Längsstrang (70) miteinander verbunden sind, der quer auf einer ersten Seite des linearen Trägers (48) angeordnet ist, und die beiden Querstränge (68) des zweiten Abschnitts (33b), die in diesen beiden Kerben (54) aufgenommen sind, durch einen oberen Längsstrang (70) miteinander verbunden sind, der quer auf der anderen Seite des linearen Trägers (48) bezüglich des unteren Längsstrangs (70) angeordnet ist.

11. Anordnung nach einem der Ansprüche 8 bis 10, **dadurch gekennzeichnet, dass** die Länge der Längsstränge (70), die sich in der Nähe des stromabwärtigen Endes (48b) des linearen Trägers (48) befinden, kleiner ist als die Länge der Längsstränge (70), die sich in der Nähe des stromaufwärtigen Endes (48a) des linearen Trägers (48) befinden.

12. Anordnung nach einem der Ansprüche 8 bis 11, **dadurch gekennzeichnet, dass** in der ersten Lage (64) von Leitern und in zwei benachbarten Lagen (54) des linearen Trägers (48), die jeweils einen Querstrang (68) des zugehörigen Leiters (33) aufnehmen, der Längsstrang (70), der den Querstrang (68), der in der stromaufwärtigen Kerbe (54) der genannten beiden benachbarten Kerben (54) aufgenommen ist, stromabwärtig verlängert, den Längsstrang (70), der den Querstrang (68), der in der stromabwärtigen Kerbe (54) der genannten beiden benachbarten Kerben (54) aufgenommen ist, stromabwärtig verlängert, überlappt.

13. Anordnung nach einem der Ansprüche 8 bis 12, **dadurch gekennzeichnet, dass** in der zweiten Lage (66) von Leitern (33) und in zwei benachbarten Kerben (54) des linearen Trägers (48), die jeweils einen Querstrang (68) des zugehörigen Leiters (33) aufnehmen, der Längsstrang (70), der den Querstrang (68), der in der stromabwärtigen Kerbe (54) der genannten beiden benachbarten Kerben (54) aufgenommen ist, stromaufwärtig verlängert, den Längsstrang (70), der den Querstrang (68), der in der stromaufwärtigen Kerbe (54) der genannten beiden benachbarten Kerben (54) aufgenommen ist, stromaufwärtig verlängert, überlappt.

14. Anordnung nach einem der Ansprüche 8 bis 13, **dadurch gekennzeichnet, dass** jeder Leiter (33) ein Paar elektrisch leitende Drähte (38a, 38b) aufweist, die benachbart sind.

15. Anordnung nach dem vorhergehenden Anspruch, **dadurch gekennzeichnet, dass** für jeden Leiter (33) die beiden Drähte (38a, 38b) axiale komplementäre Wellungen bilden, die sich quer überlappen, so dass sich einer der beiden Drähte (38a) quer über den anderen (38b) befindet.
